(19) Europäisches Patentamt
European Patent Office
Office européen des brevets

(11) **EP 4 259 363 B1**

(12) **EUROPEAN PATENT SPECIFICATION**

(45) Date of publication and mention
of the grant of the patent:
**25.12.2024 Bulletin 2024/52**

(21) Application number: **21823578.6**

(22) Date of filing: **06.12.2021**

(51) International Patent Classification (IPC):
**B22F 10/20** *(2021.01)*          **B22F 10/64** *(2021.01)*
**B33Y 40/20** *(2020.01)*          **B33Y 70/00** *(2020.01)*
**C22C 21/00** *(2006.01)*          **C22C 1/04** *(2023.01)*

(52) Cooperative Patent Classification (CPC):
**B22F 10/20; B22F 10/64; B33Y 40/20; B33Y 70/00;
C22C 1/0416; C22C 21/00;** Y02P 10/25

(86) International application number:
**PCT/EP2021/084431**

(87) International publication number:
**WO 2022/122670 (16.06.2022 Gazette 2022/24)**

(54) **NEW POWDER, METHOD FOR ADDITIVE MANUFACTURING OF COMPONENTS MADE FROM THE NEW POWDER AND ARTICLE MADE THEREFROM**

NEUES PULVER, VERFAHREN ZUR GENERATIVEN FERTIGUNG VON KOMPONENTEN AUS DEM NEUEN PULVER UND DARAUS HERGESTELLTER GEGENSTAND

NOUVELLE POUDRE, PROCÉDÉ DE FABRICATION ADDITIVE DE COMPOSANTS FABRIQUÉS À PARTIR DE LA NOUVELLE POUDRE ET ARTICLE FABRIQUÉ À PARTIR DE CELLE-CI

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.12.2020 EP 20212934**

(43) Date of publication of application:
**18.10.2023 Bulletin 2023/42**

(73) Proprietor: **Höganäs AB (publ)
263 83 Höganäs (SE)**

(72) Inventors:
• **KARIN, Frisk
182 49 Enebyberg (SE)**
• **BENGTSSON, Sven
263 39 Höganäs (SE)**
• **NYBORG, Lars
433 50 Öjersjö (SE)**
• **BHARAT, Mehta
412 96 Göteborg (SE)**

(74) Representative: **Höganäs AB (publ)
Bruksgatan 35
26383 Höganäs (SE)**

(56) References cited:
**EP-A2- 0 105 595          EP-A2- 3 611 283
CN-A- 111 560 545          CN-A- 111 659 889**

EP 4 259 363 B1

**Description**

TECHNICAL FIELD

The present invention concerns a new aluminum alloy suitable to be used at Additive Manufacturing (AM) of components made from the alloy.

BACKGROUND

Metal-based additive manufacturing has applications in many industries, including the aerospace and automotive industries.

Aluminum alloys are useful in a variety of applications. Aluminum alloy products are generally produced via either shape casting or wrought processes. Shape casting generally involves casting a molten aluminum alloy into its final form, such as via high pressure die, permanent mold, green and dry-sand, investment, or plaster casting. Wrought products are generally produced by casting a molten aluminum alloy into ingot or billet. The ingot or billet is generally further hot worked, sometimes cold worked, to produce its final form.

Aluminum alloys can be divided into several systems depending on alloy content and intended process. Most Al-based casting alloys contain 9-12% Si, an element that forms a eutectic at about 12% Si with excellent casting properties. Other elements, which may be used in casting alloys are Mg and Cu, Additions of these elements, maintain the good casting properties combined with strengthening by solid solution and precipitation of intermetallic compounds. Typical examples are Al-7Si-0.7Mg and Al9Si-3Cu.

To reach higher strength it is necessary to utilize other alloying elements and reduce the content of Si. Wrought aluminum alloys with higher strength are designated as the 2000-, 6000- and 7000- series alloys. The Tables 1 and 2 show the chemical compositions and the mechanical properties of common aluminum alloys.

**Table 1.**

| Typical Chemical composition of selected Al-alloys | | | | | | | | |
|---|---|---|---|---|---|---|---|---|
| Alloy | Si | Fe | Cu | Mn | Mg | Cr | Zn | Ti |
| A360.0* | 9.5 | <1.3 | <0.6 | <0.35 | 0.5 | - | <0.5 | - |
| 2024* | <0.50 | <0.50 | 4.4 | 0.6 | 1.5 | <0.10 | <0.25 | <0.15 |
| 6061* | 0.6 | <0.7 | 0.28 | <0.15 | 1.0 | 0.2 | <0.25 | <0.15 |
| 7075* | <0.40 | <0.50 | 1.6 | <0.30 | 2.5 | 0.23 | 5.6 | 0.20 |
| Scalmalloy** | Al-Mg-Sc alloy. Exact composition is not disclosed. | | | | | | | |
| * Metals Handbook, Properties and selection of Aluminum Alloys, ASM 1998<br>** Data from APWORKS homepage on November 17, 2020 (www.apworks.de/en/scalmalloy) | | | | | | | | |

Al-Cu alloys (2000-series)

In this group of alloys Mg is a secondary addition. Other elements are Mn, Cr and Zr. The major strength contribution comes from solution hardening and precipitation hardening by intermetallic phases, e.g., $Al_{20}Cu_2Mn_3$, $Al_{18}Mg_3Cr_2$ or $AlZr_3$. To achieve this hardening a solution heat treatment is performed, followed by an aging treatment. Iron and silicon are considered impurities, since they form detrimental intermetallic compounds. Titanium can be added to control the grain structure during ingot casting. The corrosion properties of this group of alloys are less favorable compared to other types of Al-alloys. Parts made from these alloys have high strength to weight ratio and can be used up to 150°C. The alloys are generally not weldable but have good machinability.

Al-Mg-Si alloys (6000-series)

This group of alloys is the work horse of the high strength Al-alloys. The Mg and Si addition is generally performed in the ratio of $Mg_2Si$ which is the major precipitate. The alloys require a solutionizing and aging treatment but will not reach the strength levels of the 2000- and 7000-series alloys. However, they are weldable and exhibit good formability, extrudability, machinability and corrosion resistance.

Al-Zn alloys (7000-series)

This group of alloys have Zn as the main alloying element with additions of Mg, Cu and Cr. These elements form intermetallic phases that are used in a solutionizing and aging treatment to very high strengths. The resistance to stress corrosion cracking is reduced and these materials are often used in an over aged condition to reach the best combination of strength, fracture toughness and corrosion resistance.

The mechanical properties of the different groups of alloys are summarized in Table 2.

**Table 2.**

| Mechanical properties of selected Al-alloys | | | | | |
|---|---|---|---|---|---|
| Alloy | Temper | Tensile strength (MPa) | Yield strength (MPa) | Elongation (%) | Hardness Vickers HV |
| A360.0* | F | 324 | 172 | 3 | 80 |
| 2024* | T361 | 495 | 395 | 13 | 142 |
| 6061* | T6 | 310 | 275 | 12 | 107 |
| 7075* | T6 | 572 | 503 | 11 | 149 |
| Scalmalloy** | T6 | 520 | 470 | 13 | 180 |
| * Metals Handbook, Properties and selection of Aluminum Alloys, ASM 1998<br>** Data from APWORKS homepage on November 17, 2020 (www.apworks.de/en/scalmalloy) | | | | | |

Corrosion is a systems property in that it depends on the material as well as on the environment where it is working. Nevertheless, it is possible to make some general predictions to the behavior of alloys. Aluminum generally forms a passive oxide layer that minimizes the general corrosion rate. If the layer is broken up by e.g., local variations in composition in the form of precipitates or interface between dissimilar metals, there may arise corrosion in the form of crevice corrosion, pitting corrosion or galvanic corrosion. These are all processes that can be very fast and lead to severe failures. Aluminum alloys where the alloying elements are in solution in the fcc-matrix generally exhibit strong resistance to all the localized corrosion forms, while alloys with precipitates containing Cu or Zn have a poor performance in this respect.

In the laser powder bed fusion (LPBF) process, a laser beam is scanning over a powder bed, thereby melting the powder particles in a pre-determined pattern, after which a new powder layer is applied, and the process is repeated. To produce fully dense parts, it is necessary to melt not only the powder particles of the new layer, but also some of the previously formed layers. By doing so, full fusion between layers is ensured and any defects, such as porosity, can removed. The laser is scanning very fast (200-7000 mm/s) and the laser spot is small (40-100 μm); which means that the melt pool formed is very small and the time the material is in liquid state is very short (~0,2 msec). These manufacturing limits aim at ensuring that any segregation of alloying elements during solidification will be minimal due to the short interaction times available.

However, the directional nature of the process causes both grains and sub-grain structure to be directional towards the heat source. The sub-grain morphology is either dendritic or cellular. The structure is typically large columnar grains with a very fine cell structure in the building direction. Most of the heat extracted from the built part is escaping through the part into the build plate that acts as a heat sink, thus reinforcing the directional nature of the solidification process.

The traditional alloys described above are not always well suited for the LPBF process. It is generally only the casting alloys that can be adopted for LPBF without problems. A360.0 is an alloy that prints very well with few defects and a reasonable process window suited for an industrial process. However, this material only provides limited strength.

The alloys that do reach enough strength using the traditional manufacturing processes are much harder to process without severe defects using the LPBF process. In particular, the solidification behavior is unfavorable, giving rise to cracks during solidification.

A number of inventors have partially addressed these issues:
EP0105595A2 (Alcan) discloses aluminum alloys consisting of: Cr 1.5 - 7.0 wt.%, Zr 0.5 - 2.5 wt.%, Mn 0.25 - 4.0 wt.%, balance being Aluminum and normal impurities.

In another embodiment the composition ranges are: Cr 3.0 - 5.5 wt.%, Zr 1.0 - 2.0 wt.%, Mn 0.8 - 2.0 wt.%, Al remainder and normal impurities.

The inventors also disclose a method of producing powder by rapidly solidifying the molten alloy at a cooling rate of at least 1000°C/sec and rapid enough to produce a soft particulate in which the bulk of the alloying additions are retained in solid solution.

The particles thus formed are consolidated at a temperature of 300-500°C to achieve age hardening. In one example, powder of alloy A (Cr 5.25, Zr 1.75, Mn 1.75, rem Al) is produced by gas atomization, followed by sheet rolling at 350°C, which produces a mixed microstructure with zones without visible precipitates and zones with precipitates. The tensile strength of the material is 588 MPa, yield strength 530 MPa and the elongation to fracture is 6 %.

In CN 11659889 A there is disclosed high-strength aluminum-manganese alloys having a composition according to: Mn: 1.00 wt.% - 10.00 wt.%, Mg: 0.01 wt.% - 3.00 wt.%, Si: 0.01 wt.% - 2.00 wt.%, Zr: 0.01 wt.% - 3.50 wt.%, Fe: 0.01 wt.% - 1.50 wt.%, the rest being Al.

WO2020/139427 (HRL Laboratories) discloses additively manufactured high-temperature aluminum alloys, and feedstocks for making the same. Feedstocks disclosed constitutes of a powder mixture comprising from 80 to 99% by weight an aluminum containing base powder mixed with 1 to 20% by weight of an alloying powder having a particle size smaller than the aluminum containing base powder. In certain embodiments, the feedstock contains additional alloy elements.

In one example, it is disclosed a gas atomized base powder containing the following elements in % by weight: Al 92,6, Cu 6.7, Mn 0.35, Ti 0.24. The base powder having a particle size distribution suitable for selective laser melting; D10=15 microns, D50=27 microns and D90= 44 microns. The base powder being mixed with zirconium powder with an average particle size of 0.5-1.5 microns at a content of 2% by weight.

WO2018/009359A1(NanoAl) discloses a family of aluminum alloys with high strength and ductility, excellent corrosion resistance and weldability.

It is disclosed aluminum alloy comprising about 1-10% by weight of Mg, 0.45-3% by weight of Zr and reminder Al. The alloy being completely free from intentionally added scandium, erbium, thulium, ytterbium or lutetium.

In another embodiment it is disclosed an aluminum alloy comprising Mg and at least one element from group 4 elements Ti, Zr and Hf, group 5B elements V, Nb, Ta, group 6B elements Cr, Mo and W, reminder Al. The alloy being completely free from intentionally added scandium, erbium, thulium, ytterbium or lutetium wherein the alloy comprises nano-scale aluminum-transition metals precipitates in the aluminum matrix having an average diameter ranging from about 3 nm to about 50 nm and wherein the transition metals are selected from the group of Ti, Zr, Hf, V, Nb, Ta, Cr, Mo and W. Scalmalloy / Al-Mg-Sc alloys have recently been developed for laser powder bed fusion process.

EP3165620A1 and EP3181711A1 (Airbus Defense and Space GmbH) teach that high strength, elongation and hardness can be achieved by laser powder bed fusion processing. The parts produced are free from defects and exhibit high corrosion resistance. The inventions are based on the use of scandium, an expensive and scarce rare earth element.

Additive manufacturing (AM) of objects formed from powdered aluminum-alloys is today limited by the lack of suitable alloy powders to produce high-strength objects. Most available high-strength Al-alloy compositions have been developed for casting and used in form of powders for AM, e.g., by laser powder bed fusion, the formed object is prone to crack. Some newly developed aluminum alloys used for laser powder bed fusion are supposed to enabling production of crack free objects.

Thus, there is a need for aluminum powder alloys, which can be manufactured from a homogenous melt by e.g., atomization without forming excessive precipitates, disturbing the manufacturing process. Further, such powders shall be suitable to form crack free objects having high strength as printed, and after heat treatment, through an AM process such as LPBF.

It is an object for the present invention to provide an aluminum powder suitable for additive manufacture of crack free articles, especially suitable to be used for laser powder bed fusion, LPBF. The alloy composition shall be possible to be produced as a fully pre-alloyed powder, thus avoiding segregation of particles and a non-uniform powder composition and being free from costly alloying rare earth elements and copper. In particular, the alloys of the invention shall be completely free from intentionally added rare earth metals such as scandium, erbium, thulium, ytterbium or lutetium, and free from intentionally added Cu. This object is met in a first one aspect of the invention.

Another object of the present invention is to provide an article produced from the powder, the article being crack free and having high strength, both in as-printed condition and after heat treatment. This object is met in a second aspect of the invention.

Still another object of the present invention is to provide a method for additively manufacture of articles produced from the powder. The method provided is robust and has a so-called wide process window, i.e., variations of process parameters that do not affect the properties of the printed objects. This object is met in a third aspect of the invention

Further, as chromium is an environmental pollutant it is not desirable to use high levels of chromium in general and in consumer products in particular. Accordingly, it is an aspect of the present invention to provide low chromium Al-based alloys having the above desired characteristics, or providing when used, the above desired characteristics.

The above-mentioned objects are fulfilled by aspects and embodiments thereof, presented in the accompanying set of claims. The aspects of the invention are summarized under the heading summary of invention below

## SUMMARY OF THE INVENTION

The invention is defined by the independent claims. Advantageous embodiments are defined in the dependent claims.

In a first aspect and embodiment of the invention, there is herein detailed a pre-alloyed Al-based powder suitable for additive manufacturing consisting by weight of total pre-alloyed Al-based powder of:

3 to 5.5% by weight of Mn,
0.2 to 2% by weight of Zr,
0.2 to 1.4% by weight of Cr,
0 to 2% by weight of Mg,
at most 0.7% by weight of Fe and Si in total,
at most 0.7% by weight of O as an inevitable impurity, and, at most 0.5% by weight of further inevitable impurities,

balanced with Al.

In an embodiment thereof, a pre-alloyed Al-based powder according to claim 1, wherein the content of Zr is from 0.3 to 1.8% by weight.

In an embodiment thereof, a pre-alloyed Al-based powder, wherein the content of Cr is from 0.3 to 1.4 % by weight. In an embodiment thereof, a pre-alloyed Al-based powder, wherein the total content of Fe and Si is at most 0.2% by weight.

In an embodiment thereof, a pre-alloyed Al-based powder, wherein the pre-alloyed Al-based powder is free of intentionally added Mg.

The pre-alloyed Al-based powder has a solidification cracking susceptibility index S according to equation (1) below 20°C.

In an embodiment thereof, a pre-alloyed Al-based powder having a particle size range of 10-53 $\mu$m as measured by laser diffraction according to ISO 13320-1 1999 with less than 10% of the particles falling outside the specified particle size range.

In a second aspect of the invention there is detailed herein a process for producing an article by additive manufacturing comprising the following steps:

- providing a pre-alloyed Al-based powder according any of embodiments of the first aspect;
- depositing a layer of the pre-alloyed Al-based powder forming a powder bed;
- heating said pre-alloyed Al-based powder according to a predetermined pattern by laser or electron-beam to fuse or melt the particles to be bound;
- cooling the fused or melted particles;
- repeating the depositing, heating and cooling steps until an additive manufactured article is formed;
- recover the produced article.

In an embodiment thereof, the produced article is subsequently subjected to a heat treatment, wherein the heat treatment encompasses heating the produced article to a temperature of 150-450°C for a period of time of at least 0.5 hour in an atmosphere of air.

In a third aspect of the invention there is detailed an article formed by a melt fusion process of a pre-alloyed Al-powder according to any of embodiments of the first aspect.

In an embodiment thereof, the article formed by a thermal fusion process of a pre-alloyed Al-powder, wherein the melt fusion process is in accordance with any of the embodiments of the second aspect.

## BRIEF DESCRIPTION OF THE DRAWINGS

Figure 1.
Simulation of solidification according to the Scheil-Gulliver method. The lines show the temperature at which the remaining liquid (Solidus) is in equilibrium with the solid as a function of mass fraction solid formed.

Figure 2.
Process window diagram for Alloy D. The relative density is shown as a contour diagram with the laser power (W) and the Laser speed (mm/s) on the ordinate and abscissa respectively. The hatch distance is 100 $\mu$m. The process window is the region where the relative density is above 98.5%.

Figure 3.
Hardness as a function of heat treatment. The ageing treatment was performed at 410°C in air. The time at temperature is shown on the abscissa.

Figure 4:
Investigation of cracking susceptibility to Fe and Si in combination on the alloys of the invention.

Figure 5:

(a) Particle size ($\mu$m) vs volume %, and
(b) Particle size ($\mu$m) vs cumulative volume%.

Figure 6:
DOE cube design showing all three planes and the notch along front plane to mark gas flow direction (front plane: XZ; top plane: XY; right plane: YZ; along with build direction and gas flow direction)

Figure 7:
Design of experiment (DOE1) showing the different processing parameters and number of samples per parameter. Layer thickness and laser power was kept constant.

Figure 8:
Design of experiment 6.1 result showing surface plots for relative density for all four alloys. a) Alloy A b) Alloy B c) Alloy C d) Alloy D.

Figure 9:
Surface plots showing a) Design of experiment 6.2, b) Design of experiment 6.3, c)/d) Design of experiment (1,2,3) showing laser speed vs hatch and laser speed vs laser power respectively for Alloy D.

Figure 10:

a) X-ray plots for all four alloys in as-printed condition.
b) Plot for alloy D in as printed condition with inset showing the area between $2\Theta=37°$- $47°$ showing the minor phases formed in all four alloys. Suspected to be Al-Mn based precipitates. $\Delta$= pure-Al peaks and $\blacklozenge$=Al-Mn precipitate peaks.

Figure 11:

a) Theoretical Effect on lattice parameters for Mn, Cr, and Zr. Note that dotted lines represent intercept correction assuming pure Al= 4.0478 Å instead of Al = 4.016 Å
b) Lattice parameter values based on X-ray diffraction patterns for all four alloys in as-printed conditions. Reasonable values within 0.01 Å accuracy achieved.

Figure 12:

a) 20X optical microscopy image of as-atomized powder Alloy C, etched with Keller's reagent.
b) 50x optical microscopy image of as-atomized powder Alloy C, etched with Keller's reagent.

Figure 13:
a) Top plane (XY) b) right plane (YZ) and c) front plane (XZ) views for cube of Alloy D in as-printed state having -99.6% relative density.

Figure 14:
Two types of typical defects observed after printing of Al-alloys (illustrated for Alloy D); a) Shows the keyhole defects at low magnification (a) and close-up view (b); lack of fusion defects at low magnification and close-up view (d) .

Figure 15:
SEM image of as-atomized powder of Alloy C showing dendritic structure (a); magnified image (b) with nanometric particles inside dendritic regions (marked with yellow arrows). The particles marked with a red arrow are leftover silica from polishing with OP-U.

Figure 16:
SEM image of Alloy D (as-printed) along a) front plane with build direction from bottom to top and melt pools marked in red b) top plane with build direction inwards from image.

Figure 17:
SEM images showing the melt pool boundary precipitates in high resolution. Two categories of precipitates were identified: large (200-300 nm, blue arrows) and small (<100 nm, yellow arrows). Large precipitates are shown in high magnification in the inset in b).

Figure 18:
SEM image of Alloy D showing a) melt pool boundary with grain refinement at melt pool boundary region and b) magnified region showing grain boundary and sub-grain boundary particles.

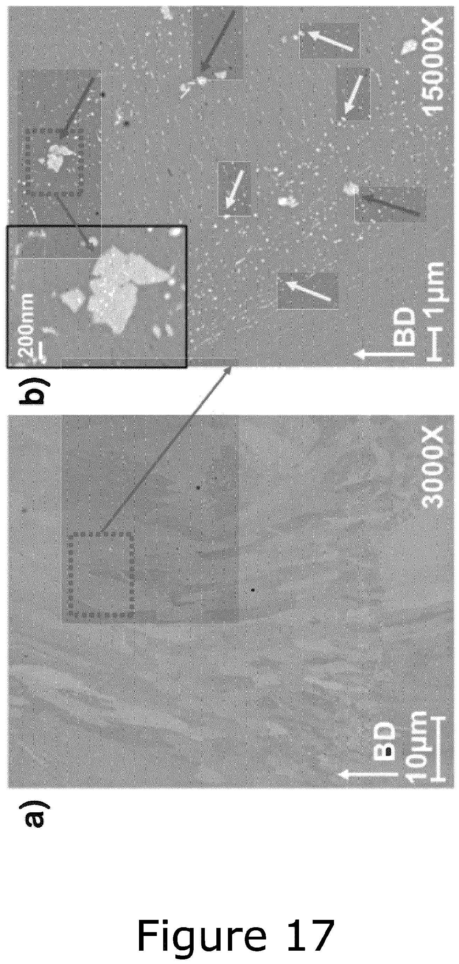

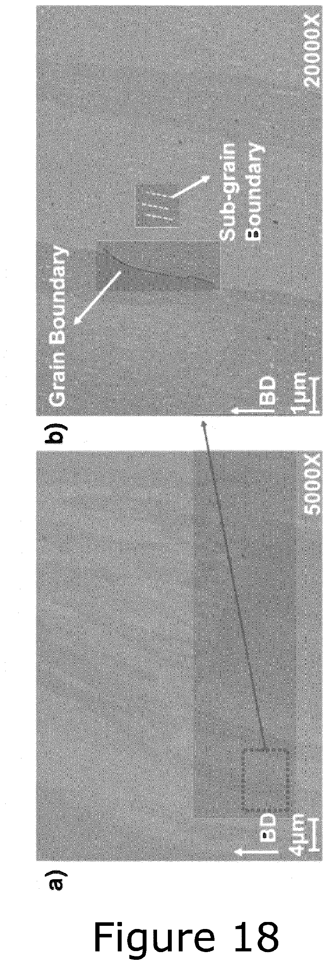

Figure 19:
Chemical composition of three categories of Mn-containing precipitates depicted by EDS analyses; involving sub-grain boundary precipitates as well as small and large precipitates at melt pool boundary precipitates. The sub-grain boundary precipitates are illustrated in Figure 18 and the melt pool boundary precipitates are visualized in Figure 17.

Figure 20:
SEM image of alloy D showing two categories of melt pools a) Normal melt pools with long columnar grains epitaxial to build direction b) Melt-pools with refined grains (grain refinement shown in inset image).

Figure 21:

a) SEM image in SE2 mode showing Alloy D in top plane section at 20kX with Zr dendritic structures.
b) SEM image in BSE mode showing Alloy C in top plane section at 2.5kX with Zr faceted structures.

## DETAILED DESCRIPTION

To optimize an alloy for rapid solidification processes computational methods, Integrated Computational Materials Engineering, ICME, is powerful.

The effects of different alloying elements on the solidification behavior and on the precipitation processes in alloys can be calculated and good predictions of properties for new alloying systems can be obtained.

The method is based on in-depth understanding of the relation between phase relations and properties for the specifically targeted material and process. A combination of calculations with selected experimental studies is needed.

The advantage of a ICME development process is that investigations of previously unknown areas of the compositional space for a class of materials is possible. This method was used for the present invention to show why the alloy composition is radically different from available alloys, regarding how the alloying elements have been used to achieve high-strength components.

The alloying elements were selected on the basis of the potential solid solution strengthening effect, as described via first-principle calculations.

This was then combined with the previous knowledge of extension of solid solubilities in Al-based alloys to estimate how much solutes could be expected to dissolve and what could be the as-printed strength of these alloys.

The amount of supersaturation in solid solution is supported by non-equilibrium calculations and evaluation of the resistance to nucleation/coarsening of second phase particles based on diffusivities and rapid cooling during LPBF processing.

Tentative phase diagrams (from binary to quaternary) were developed using ThermoCalc software (version and database) and possible undercooling via LPBF processing was used as a factor to identify how high percentage of solute that may be dissolved as compared to equilibrium.

The second important criterion for alloy design was to choose alloying elements based on Scheil solidification calculations and selected for negligible solidification cracking susceptibility.

This approach will create an easy pathway for avoiding unnecessary issues during printing. The Scheil curves were developed using ThermoCalc software using the TCAL7 and MOBAL5 databases.

Unexpectedly, it was found that no low melting phases are formed near the end of the solidification stage for the alloys of the invention, thereby avoiding the risk for solidification cracks. This is manifested by an excellent cracking solidification index.

Also, it has previously been expected that Cr-containing phases will be formed during solidification at printing, thus diminishing the solution hardening effect of Cr, by the carefully selection of elements and contents thereof, the formation of such precipitates has surprisingly been possible to avoid. Similarly, the alloying elements Zr and Mn with contents according to the present invention will not form detrimental precipitates at printing, thus enabling age hardening.

The pre-alloyed Al-based powder was designed using Integrated Computational Materials Engineering (ICME) for additive manufacturing processes where solidification is rapid, i.e., more than 1000°C/s, and the formation of precipitations in the liquid is suppressed.

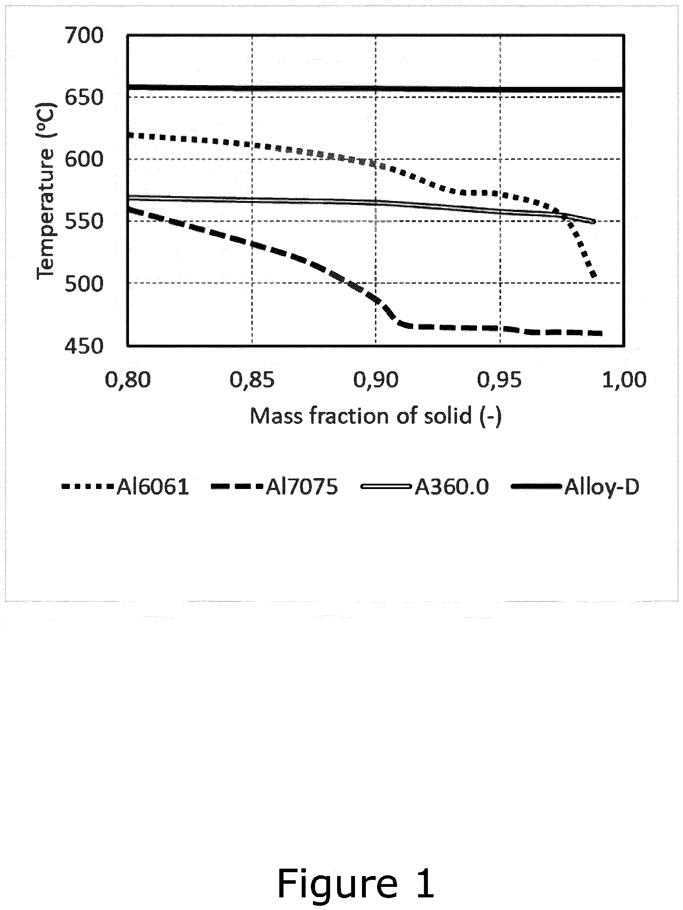

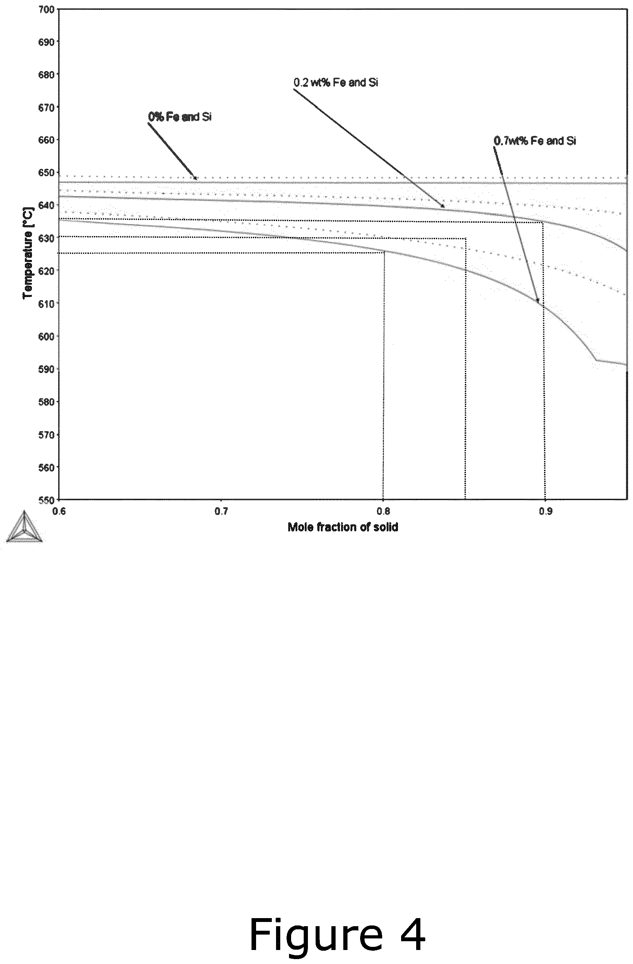

The alloying elements are responsible for the strengthening of the alloy and will only be efficient in the rapidly solidified microstructure. In all embodiments of the invention, the alloys have a stable solidification path up till 80% mole fraction of solid with a solidification temperature drop of less than 25°C allowing LPBF-printing essentially without crack formation (c.f. Figure 4) contrary to existing prior art alloys (c.f. Figure 1) with the exception of A360.0. Additionally, the most preferred alloys of the invention have a stable solidification path, i.e., a single structure is formed at solidification, and can be printed by e.g., LPBF without cracks (c.f. Figure 4).

The as printed article is characterized by having a structure characterized by a cellular/dendritic microstructure wherein the phase composition of the microstructure is single phase fcc, containing less than 5% by volume of $Al_6Mn$, $Al_3Zr$ and other precipitates.

The pre-alloyed Al-alloy powder according to the present invention may be used in additive manufacturing of Al-alloy parts. The parts can easily be printed with a wide processing window. The parts exhibit high strength and can be heat treated after the additive manufacturing step in order to further improve the properties.

Thus, in order to obtain improved strength, the as printed article may be heat-treated, i.e., age-hardened, at 150-450°C for a period of time of at least 0.5 hour in an atmosphere of air. Thereby an article may be produced having a hardness at least 125 HV0.3 measured according to ISO 6507-1 - 2018.

The microstructure of the article is characterized by a cellular/dendritic microstructure wherein the phase composition of the microstructure is single phase fcc, containing 2-15% by volume of $Al_6Mn$ and of $Al_sZr$, and up to 10% by volume of other precipitates

The alloying system is based on Al-Mn with additions of Cr and Zr. The results from experiments and calculations are presented in Table 3 in particular, wherein for each constituent in the aluminum alloys are indicated with an "X" where this constituent contributes to the synergistic effects of alloying in combination with the other elements of the aluminum alloys of the present invention.

A compositional region of particular interest is highlighted in Table 3, wherein the elements of the present alloys exhibit optimal synergistic effect on the present alloys. However, while working in concentration regions surrounding this optimal region of interest is less preferred, alloys of such less than optimal element inclusions nevertheless exhibit improved properties over other alloys of the prior art, and are accordingly not excluded from the present invention.

In accordance with the present invention, there is herein detailed:

A pre-alloyed Al-based powder suitable for additive manufacturing consisting by weight of total pre-alloyed Al-based powder of:

> 3 to 5.5% by weight of Mn,
> 0.2 to 2% by weight of Zr,
> 0.2 to 1.4% by weight of Cr,
> 0 to 2% by weight of Mg,
> at most 0.7% by weight of Fe and Si in total,
> at most 0.7% by weight of O as an inevitable impurity, and, at most 0.5% by weight of further inevitable impurities,

balanced with Al.

Oxygen in general is ubiquitously present in aluminum alloys as an inevitable impurity. The present methods of manufacturing the pre-alloyed powders of invention provides between 0.35 to 0.55% by weight of oxygen as an inevitable impurity (c.f. Table 9), but depending on the powder size, this value will vary. No particular nor detrimental effects of oxygen in the stated ranges were observed in the experiments.

In general, it is preferably to assure that the level of further inevitable impurities is as low as technically possible. Preferably, the concentration of further inevitable impurities is below 0.4 wt.%, below 0.3 wt.% or even more preferable, below 0.2 wt.% or below 0.1 wt.% by weight of the pre-alloyed Al-based powder.

In accordance with the invention, alloying elements Cr and Mn were provided for causing a solution hardening effect while the alloying element Zr was provided for contributing to precipitation hardening during a subsequent heat treatment after the printing process. Surprisingly, as seen in the experiments and highlighted in Table 3, synergistic effects of the added components in the claimed concentration ranges were observed.

The content of Zr is from 0.2 0.1 to 2.0% by weight of the pre-alloyed Al-based powder. In the experiments (c.f. Table 3) it was found that a Zr-content above 2% will disturb the atomization process and a content below 0.2% by weight will not participate to the desired precipitation hardening effect after heat treating of the article.

According to the invention, the zirconium content is not lower than 0.2 wt.% by weight of the Al-based powder, preferably not lower than 0.3 wt.%, not lower than 0.4 wt.%, more preferably not lower than 0.5 wt.%, or even more preferably not lower than 0.6 wt.% by weight of the pre-alloyed Al-based power and in the articles produced from the pre-alloyed Al-based powder.

According to the invention, the zirconium content is lower than 2% by weight of the pre-alloyed Al-based powder, preferably lower than 1.9 wt.%, lower than 1.8 wt.%, lower than 1.7 wt.%, more preferably lower than 1.6 wt.%, lower than 1.5 wt.%, lower than 1.4 wt.%, lower than 1.3 wt.%, or lower than 1.25 wt.% by weight of the pre-alloyed Al-based power and in the articles produced from the pre-alloyed Al-based powder.

In preferred embodiments, the zirconium content is from 0.2 to 1.9 wt.% by weight, preferably from 0.3 to 1.8 wt.%, from 0.4 to 1.7 wt.%, more preferably from 0.5 to 1.6 wt.%, from 0.5 to 1.5 wt.%, but most preferred from 0.6 to 1.4 wt.%, from 0.7 to 1.3 wt.%, or from 0.8 to 1.1 wt.% by weight of the pre-alloyed Al-based powder and in the articles produced from the pre-alloyed Al-based powder.

In accordance with the invention, it was considered that addition of Mn and Cr will lead to increased strength due to the substitution of Al atoms by Mn and Cr atoms. If the matrix is super-saturated by Mn and Cr, precipitates are formed in the fcc-Al matrix, which will lead to a decrease in the substitutional strengthening effect.

Surprisingly, (c.f., Table 3) it was found that for certain concentrations of Cr and Mn, the presence of both Cr and Mn in the alloys of the invention lead to significantly lower than expected crack formation in articles formed by LPBF-printing. Based on general principles it was considered that this effect would be stronger the more Mn and Cr that was added, however and surprisingly, the effect was found to top at about 0.7 wt.% Cr and to disappear when the chromium content superseded 1.4 wt.% in the alloys of the invention.

In subsequent experiments it was resolved that addition of Cr contents in excess of 1.4% to the compositions on the invention will lead to formation of undesired intermetallic $Al_xCr_y$ precipitates in the melt at temperatures above 800°C.

Such precipitates forming in the melt will be too large to contribute to strengthening of the alloy and remove Cr from the solution which decreases the substitutional strengthening. Also, the formation of intermetallic phases at high temperatures causes problems at atomization, with clogging of the nozzle.

The content of Cr is from 0.2 to 1.4% by weight of the pre-alloyed Al-based powder. According to the invention, the chromium content is not lower than 0.2 wt.% by weight of the pre-alloyed Al-based powder, preferably not lower than 0.3 wt.%, not lower than 0.4 wt.%, more preferably not lower than 0.5 wt.%, or even more preferably not lower than 0.6 wt.% by weight of the pre-alloyed Al-based powder and in the articles produced from the pre-alloyed Al-based powder.

According to the invention, the chromium content is lower than 1.4% by weight of the pre-alloyed Al-based powder, preferably lower than 1.35 wt.%, lower than 1.30 wt.%, lower than 1.25 wt.%, more preferably lower than 1.20 wt.%, lower than 1.15 wt.%, lower than 1.10 wt.%, lower than 1.05 wt.%, or lower than 1.0 wt.% by weight of the pre-alloyed Al-based power and in the articles produced from the pre-alloyed Al-based powder.

According to the invention, the chromium content is from 0.2 to 1.4 wt.% by weight, preferably from 0.3 to 1.35 wt.%, from 0.4 to 1.30 wt.%, more preferably from 0.5 to 1.25 wt.%, from 0.5 to 1.15 wt.%, or from 0.6 to 1.4 wt.%, from 0.7 to 1.3 wt.%, or from 0.8 to 1.1 wt.% by weight of the pre-alloyed Al-based powder and in the articles produced from the pre-alloyed Al-based powder.

Thus, Cr is present in an amount of 0.2-1.4% by weight, preferably 0.3-1.4%, more preferably 0.4-1.4%, but even more preferably 0.5-1.4% by weight of the Al-based powder and in the article produced from the powder. For the same reasons Mn is present in an amount of from 3 to 5.5% by weight of the pre-alloyed Al-based powder and in the articles produced from the powder.

In general, it was observed that within this concentration region of Mn, the alloys of the invention were responsive to the content of Zr and Cr, but not outside. A certain co-dependency of Zr and Cr on Mn was observed such that in preferred embodiments the total concentration of Mn+Zr+Cr shall be from 3.4 to 8.5 wt.% by weight of the Al-based powder and in the articles produced from the powder.

In preferred embodiments thereof, total concentration of Mn+Zr+Cr shall be from 3.7 to 8.0 wt.%, from 4 to 7.5 wt.%, from 4.25 to 7.25 wt.%, or from 4.5 to 7 wt.% by weight of the Al-based powder and in the articles produced from the powder.

Optionally, Mg may be present up to 2% by weight of the pre-alloyed Al-based powder and in the articles produced from the powder. Mg will contribute to the solution strengthening. In an embodiment, the pre-alloyed Al-based powder is free from intentionally added Mg, which in the embodiment is thus considered as another inevitable impurity.

The presence of too much Fe and/or Si will lead to formation of low melting liquid at the final stages of the solidification process, since this liquid can be trapped at the grain boundaries and thus form cracks on the final contraction during solidification. Surprisingly it was found (c.f. Figure 4) that the phenomenon is independent on the individual contributions of Fe and Si, but merely depends on the total concentration of these two elements and that by limiting the total amount of Fe and Si this phenomenon could be suppressed.

It has thus been shown that an important feature is to keep the contents of Fe and Si at low levels, at most 0.7% by weight in total of the elements, preferably at most 0.5 % by weight, and more preferably at most 0.2% by weight in total.

The amount of other inevitable impurities is at most 0.5% by weight, preferably at most 0.3% by weight, of the Al-based powder and in the article produced from the powder.

The Al-based powder according to the invention has a melting range of at most 300°C, the melting range is defined as the difference between the starting temperature of solidification and the temperature when all liquid has been solidified.

However, in order to avoid cracking in the final stages of solidification the drop in melting temperature near complete solidification must be limited, see Figure 1. One practical way to evaluate the tendency for the alloy to form cracks during solidification is to use the solidification cracking susceptibility index.

Solidification cracking susceptibility index is defined in accordance with equation (1) as:

$$(1) \qquad S = \left| \frac{dT}{d(f_s^{\frac{1}{2}})} \right| \, near \, \left( f_s^{\frac{1}{2}} \right) = 1$$

Where S is the solidification cracking susceptibility index, T is temperature, and $f_s$ is the mass fraction of solid.

The Al-based powder according to the present invention has a solidification cracking susceptibility index is of less than 20°C. The index is a measure of how the last melt solidifies in the range of 80 to 100% solidified. The index measures the slope of the temperature change in this range. A360.0 has a solidification cracking susceptibility index of 44°C and Al 6160 and index of 257°C. The lower the index, the less the alloy is prone to solidification cracking.

The Al-alloy powder can be produced by any rapid solidification process, such as gas atomization, but also spray deposition, melt spinning, melt extraction, etc. without forming excessive precipitates which otherwise would be harmful for the production process in that such precipitates tend e.g., to block an atomization nozzle or otherwise disturb the melted stream.

The powder with the intended composition is preferably produced by melting materials with the desired composition and performing inert gas atomization of the melt for obtaining a pre-alloyed atomized powder. It is also possible to atomize using air or water as atomizing medium but in relation to the present invention, using water will have a negative influence on the powders produces, since the oxygen content will be too high, and also the particle morphology may suffer, since air and water atomized powders tend to be more irregularly shaped compared to powders formed by inert gas atomization.

The alloying elements of the powder of the present invention is also selected to avoid clogging of the atomization nozzle during atomization. This problem has been avoided in some prior art powder compositions by using a mix of different powders, themselves either pure elemental powders or pre-alloyed in order to obtain the desired chemical composition. The drawback of mixes is that the different powders can segregate during handling and processing giving rise to chemical inhomogeneity of the printed part. This is avoided in the present invention as the aluminum powders of the present invention are simple to pre-alloy without loss of composition.

As is well-known in the field of LPBF-printing, the size and morphology of the powder particles used in printing are important for the ability to spread powder in an even and homogeneous powder layer. Working sieve cuts are known to be found in the interval from 5 to 150 $\mu$m.

A small interval is favorable for the melting process and for the homogeneity of the powder bed, resulting in a more stable melting process with fewer defects, such as porosity. Common ranges of particle size are 15-45 um or 20-53 $\mu$m, but depending on the LPBF equipment used and the application requirements, any of the following sieve cuts can be used; 5-36, 10-45, 15-45, 20-53, 20-63, 45-90, 45-106, 53-106, 45-150, 53.150, 63-150, 75-150, 90-150, 106-150 $\mu$m. It is a particular benefit of the present Al-based powders that these can easily be manufactured at a size range desirable for LPBF-printing.

The particle size ranges mentioned mean that at most 2% by weight of the powder has a particle size above the upper limit and at most 2% by weight of the powder has a particle size below the lower limit. The particle sizes measured by laser diffraction according to ISO 13320-1 1999.

The shape (morphology) of the powder is also important in defining the spreading behavior. A spherical shape results in more stable flow and spreading action and the result is fewer defects, such as porosity and surface quality. Thus, gas atomization is preferred when producing the new Al-based powder since metal powder produced by this method exhibits a spherical shape.

The Al-based powder according to the present invention can function in several additive manufacturing processes, providing that the solidification rate is sufficient. AM by electron beam melting and direct energy deposition are processes that meet these requirements, while the process is exemplified below using the laser powder bed fusion process.

EXAMPLES

**Example 1**

To design the composition of the Al-based powder a ICME (Integrated Computational Materials Engineering) strategy was applied. CALPHAD (CALculation of Phase Diagrams) type calculations were used to optimize the alloy composition of the new alloy.

CALPHAD calculations involve a full thermodynamic description of all possible phases within the compositional space for Al-alloys. Using this base, predictions of the phases that are expected and their composition are made with good accuracy. The results are valid for an equilibrium state.

In material produced by LPBF, the microstructures, and the phases that are present, are a result of a rapid solidification. The equilibrium calculations are not relevant for interpretation of these microstructures. However, the thermodynamic relations in the compositional space and the phase relations can be used to assess the tendency for phase formation by coupling a kinetic description of the phase formation. By doing this, diffusional processes, nucleation and growth were taken into account together with the thermodynamic description.

Using CALPHAD type calculations the solidification path was predicted, as well as the tendency for segregation of alloying elements in the areas of the last melt. Such segregation should be limited for a crack-free solidification structure.

In a first step a tentative composition was determined using calculations to obtain an alloy with a stable solidification path in order to avoid hot-cracking.

Thereafter the compositional space for the alloys was calculated and the maximum limit of the alloying elements was determined. The compositional limits were determined by calculating the phases that will form on rapid solidification. Outside the marked limits in Table 3 unwanted phases are formed resulting in problems with the atomization process or resulting in deteriorated mechanical properties.

By coupling the calculations of the phase equilibria with a kinetic description of the alloy system, nucleation, growth and coarsening of secondary hardening phases was simulated. By this method the alloy compositions were adjusted to optimize the precipitation of secondary hardening phases during heat-treatment.

The CALPHAD calculations were coupled with models describing the different strengthening mechanisms, solution strengthening, precipitation strengthening and grain refinement strengthening.

It was found that the main strengthening mechanism for this alloy was solution strengthening. Precipitation hardening and grain refinement strengthening were also identified to contribute to the strength of the alloy. The combination of these strengthening mechanisms determines the properties of the new alloy.

Table 3 below shows the results of the calculations performed to determine the alloying ranges with respect to formation of unwanted phases. To achieve solution strengthening, the highest possible amounts of alloying elements without forming unwanted phases were identified.

Compositions marked in Table 3 with a "x" are acceptable with regard to the presence of unwanted phases and with regard to alloying effect, compositions without any "x" are not acceptable.

Formation of Cr containing precipitates in the melt or in the solid phase will decrease the solution hardening contribution since they remove Cr from the solution. Precipitates formed at high temperatures in the melt are coarse and will not give a precipitation hardening effect.

Formation of Mn-containing precipitates in the melt or in the solid phase will decrease the solution hardening contribution. The large primary precipitates do not contribute to the precipitation hardening. Too large fraction of primary precipitates will lead to clogging of the atomizing nozzle and production interruptions.

**Table 3**

| wt.% | 0 | 0.1 | 0.2 | 0.5 | 0.7 | 1.4 | 2 | 2.5 | 3 | 3.5 | 4 | 5 | 5.5 | 6 |
|------|---|-----|-----|-----|-----|-----|---|-----|---|-----|---|---|-----|---|
| Mn |   |   |   |   |   |   |   |   | x | x | x | x | x |   |
| Cr |   | x | x | x | x | x |   |   |   |   |   |   |   |   |
| Zr |   | x | x | x | x | x | x |   |   |   |   |   |   |   |
| Mg | x | x | x | x | x | x | x | x |   |   |   |   |   |   |
| Fe | x | x | x | x | x |   |   |   |   |   |   |   |   |   |
| Si | x | x | x | x | x |   |   |   |   |   |   |   |   |   |

**Example 2**

The computationally derived alloy compositions were used to produce four different gas atomized Al-based powders, A, B, C, and D, having a chemical composition according to Table 4. Several parts were printed using different printing parameters. Especially the laser power and the laser speed were varied over a wide range.

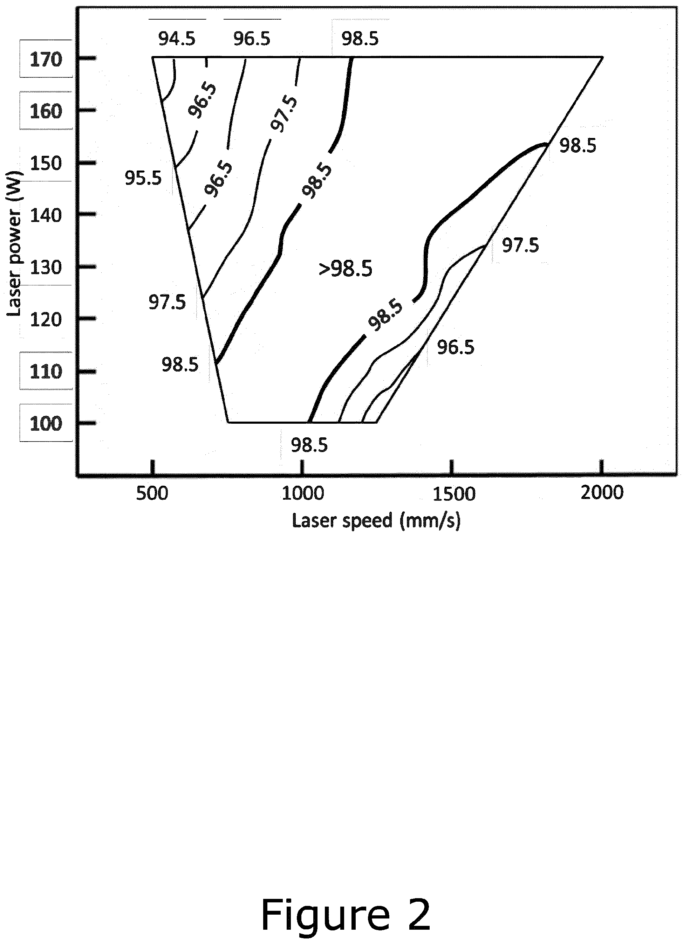

A large region was found where the relative density of the produced article was better than 98.5%, see Figure 2.

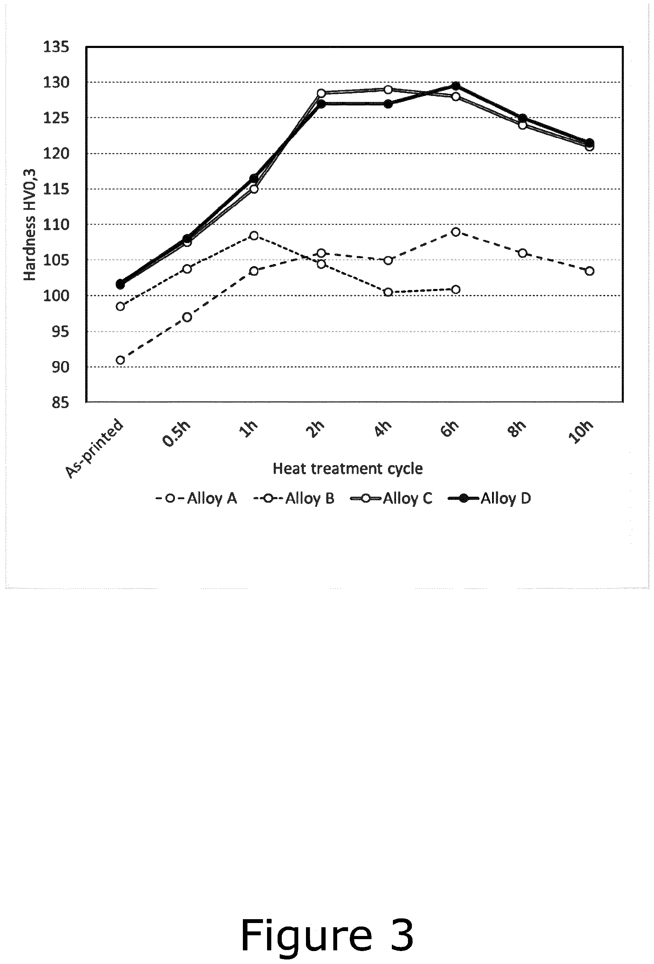

Further examination by light optical microscopy revealed a single-phase structure without any cracks. The Vickers hardness, HV0.3, according to ISO 6507-1 - 2018 was measured in the as-printed condition, as well as in heat treated condition, the results are presented in Figure 3. It can be seen that the Alloy A, C and D are age hardenable and especially the hardness for Alloy C and D increase significantly to just below 130 HV0.3.

**Table.4**

| Chemical composition of aluminum powders in Example 2 | | | |
|---|---|---|---|
| Designation | Mn | Cr | Zr |
| A (comparative example) | 4,75 | - | 1,25 |
| B (comparative example) | 4,75 | 0,75 | - |
| C (according to invention) | 4,75 | 0,75 | 0,70 |
| D (according to invention) | 4,75 | 0,75 | 1,25 |

Effect of chromium

From the experiments it could be deduced that while the effect of chromium is mainly solution strengthening, importantly and surprisingly, chromium also affects the precipitation hardening sequence. This creates an alloy with improved properties and temperature resistance.

The as-printed samples are precipitation free (verified experimentally), which means that all precipitation is induced during the hardening heat-treatment. The sequence of the precipitation accordingly is affected by the composition.

Precipitation hardening heat-treatments at 678K hardens the alloys by sequential precipitation of $Al_6(Mn,Cr)$, $Al_{12}(Mn,Cr)$, $Al_3Zr$. The amount of chromium in the alloy will govern the precipitation sequence and determine the amount of precipitates and their stability to coarsening. This means that the properties are critically dependent on the specified amount of Cr as detailed herein.

The advantage of the present alloys comprising chromium compared to similar materials without chromium is higher strength, but importantly and surprisingly also an increased temperature stability, which is a critical parameter for industrial applications.

The effect of Cr is proven in Figure 3. Hardening curves show the following:

- Alloy A (AlMnZr): Starts with ~90 HV and only peaks to 105-110 HV.

- Alloy B (AlMnCr): Starts with ~98 HV and peaks to 115 HV at 648 K.

- Alloy C (AlMnCrZr - invention) : Starts with ~103 HV and peaks to 140 HV at 648 K.

- Alloy D (AlMnCrZr - invention): Starts with ~103 HV and peaks to 140 HV at 648 K.

This experiment clearly shows how chromium has modified the hardening rates. Alloy A hardens by 20 HV (90 -> 110 HV) but Alloy C, D hardens by 35 HV (103 -> 140 HV). The hardening rates reflect the precipitation sequences, while the as-printed hardness reflects the solution hardening effect. The effect of chromium on the alloy is a combination of both.

In this, a surprising synergistic effect is observed as by the rearrangement of Mn and Cr between the different precipitates the coarsening rate is slowed down, and the hardening effect is retained for longer times, giving a better temperature stability.

The curves shows that chromium has an important effect at the start of the hardening. Alone, chromium will not give an alloy with the desired properties. When chromium is combined with zirconium its hardening effect is retained at longer times.

The alloys with only Mn and Zr, and no Cr, has a significantly lower hardness. Higher contents of Mn and Zr will not improve this.

## Example 3

The solidification behaviors for alloy D according to Example 2 and for the known wrought alloys 6081, 7075 and A360.0 were simulated using the Scheil-Gulliver method and the CALPHAD method, as also used in Example 1.

Figure 1 shows the results of the simulations. Note that only the region near complete solidification is included in the diagram, with solid fraction ranging from 0.8 (80%) to 1 (100%). It can be seen that the wrought alloys 6061 and 7075 exhibit a sloping curve with especially 7075 exhibiting a steep slope near the end of the solidification. This behavior is typical for material that forms hot cracks at the end of the solidification. The Casting alloy A360.0 exhibits a much better behavior with only a slight drop near complete solidification. The invented alloy D exhibits no such drop at the end of the solidification.

The individual solidification cracking susceptibility indices, *S*, were determined for each alloy and the results are shown in Table 5 below.

**Table 5**

| Alloy | *S*[°C] |
|-------|---------|
| D | 0 |
| 6081 | 257 |
| 7075 | 223 |
| A360.0 | 45 |

## Example 4

It was found in the experiments detailed above (Example 1 and Table 3) that individually, Fe and Si may be present up to 0.7%wt without negatively influencing the suitability of the Al-based powders of the invention for LPBF-printing. This is advantageous as it reduces the strains on the raw materials for use in forming the Al-based powders of the invention, and more low cost recycled Al-based products can be used for forming the present powders of the invention.

In numerical experiments as detailed above (Example 1), the effect of Fe and Si on the cracking susceptibility of the alloys of the invention were further investigated, with the aim of determining if limit on the content of Fe and Si are present, if both of these impurities are in the raw materials used for forming the present Al-based powders.

As shown in Figure 4, the solidification temperature was found have a dependency on the total Fe and Si content. The higher the total contents of these elements, the larger the risk for forming a melt with a low solidification temperature which will cause problems with hot-cracks in LPBF-printed objects using the powders of the invention.

Accordingly, while individually both Fe and Si can be present up to 0.7%wt without causing the presence of melts with too low solidification temperatures, the total combined concentration should also not exceed 0.7%wt. From Figure 4 it follows that preferably the total amount of Fe and Si should not exceed 0.5%wt, and should even more preferably not exceed 0.2%wt.

## Example 5

In further experiments with LBPR-printed objects reported herein, powder variants comparative to the experiments under Example 2 were produced by means of nitrogen gas atomization process and the powder produced was classified to nominal particle size range of 20-53 μm.

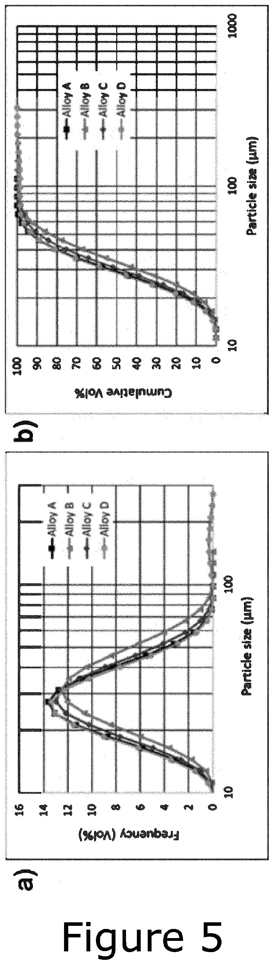

Four categories of powder grades were designed having final chemical compositions as presented in Table 6. The particle size distribution was measured by laser diffraction according to ISO 13320-1 1999 using a Mastersizer 3000 from Malvern UK and the measurements were repeated five times (c.f., Table 7 and Figure 5).

The particle size ranges mentioned mean that at most 2% by weight of the powder has a particle size above the upper limit and at most 2% by weight of the powder has a particle size below the lower limit.

The experiments clearly showed the suitability of the present Al-based alloys for forming Al-based powders with high uniformity.

**Table 6: Alloy compositions**

| Alloy | Alloy composition (wt.%) rest Al |
|---|---|
| Alloy A | 4.8%wt Mn, 0.5%wt Zr |
| Alloy B | 5.0%wt Mn, 0.8%wt Cr |
| Alloy C | 4.9%wt Mn, 0.8%wt Cr, 0.55%wt Zr |
| Alloy D | 5.0%wt Mn, 0.8%wt Cr, 0.55%wt Zr |

**Table 7: Particle size distribution**

| Sample Name | $D_{10}$ ($\mu$m) | $D_{50}$ ($\mu$m) | $D_{90}$ ($\mu$m) |
|---|---|---|---|
| Alloy A | 18.5 | 29.1 | 46.7 |
| Alloy B | 20.4 | 33.4 | 56.1 |
| Alloy C | 19.0 | 30.5 | 51.0 |
| Alloy D | 18.1 | 28.7 | 47.0 |

**Example 6**

LB-PBF processing and design of experiments for establishing full density was tested in a subsequent experiment.

The different variants of powder from Example 5 were processed in an EOS M100 machine with a 40 $\mu$m spot size, 200 W (170W nominal power) Yb-fiber laser. The samples were initially printed keeping 170 W power, 0.13 mm hatch distance, 1000 mm/s speed and 0.03 mm layer thickness as main processing input along with normal scan rotation of 67°.

The powder samples were conditioned by means of a drying procedure at 353 K for 4 hours before every print.

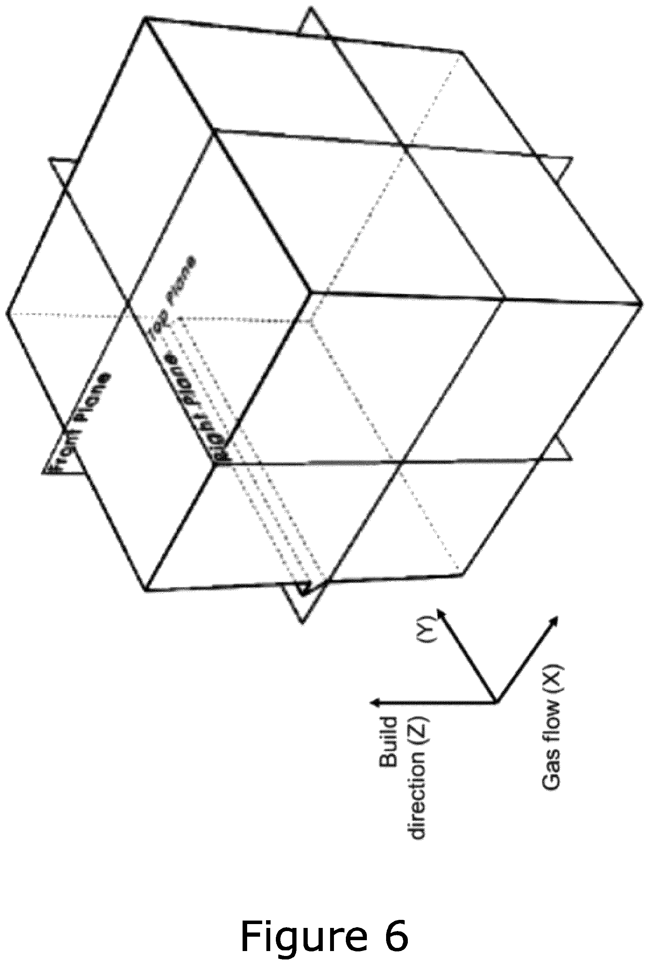

The samples were printed as cubes of 10mm x 10mm x 10mm designed to mark the direction of gas flow in the chamber (shown in Figure 6). The samples were cut with a saw after printing.

The processability of the materials was further derived based on a simple cubic factorial design to identify the conditions of interest with high relative density (-99.5%), as shown in Figure 2.

This design of experiment (DOE) was done with hatch distance and laser speed as initial variables compared to main processing input to identify conditions for high density processing.

A second DOE was thereafter done to confirm the processing parameter window and verify if the values are experimentally acceptable by printing three more samples for every point of interest.

A third DOE was finally done for one of the quaternary alloys (Alloy D) to make a full three-dimensional design with laser power as the third variable in the DOE.

Table 8 summarizes the range of processing parameters used for each alloy in the DOE.

**Table 8: Summary of processing parameters for design of experiments (DOE)**

| Alloy | Laser power (W) | Hatch distance (mm) | Laser speed (mm/s) | Layer thickness (mm) | Total number of samples |
|---|---|---|---|---|---|
| Alloy A | 170 | 0.1-0.15 | 500-1500 | 0.03 | 13 |
| Alloy B | 170 | 0.1-0.15 | 500-1500 | 0.03 | 13 |
| Alloy C | 170 | 0.1-0.15 | 500-1500 | 0.03 | 13 |
| Alloy D | 100-170 | 0.1-0.15 | 500-2000 | 0.03 | 46 |

The relative densities of the samples were subsequently determined from optical microscopy of cross-sections.

The sections investigated were observed along three planes, as shown in Figure 6.

To identify and retrieve the porosity, results were then obtained for all three planes and averaged for each sample in order to minimize effect of orientation for the overall porosity values reported. The image analysis was done by using ImageJ software and sections of each sample having approximately 30-50 mm$^2$ area per plane.

The first DOE was done to assess the printability of all four alloys with aim to reach >95% relative density.

The printing parameters were developed from appropriate settings for EOS M290 machine and modified to suit the processing in EOSM100 with compensations for lower power and smaller laser spot size.

Based on this, a cubic DOE was set with fixed laser power of 170W and layer thickness of 0.03 mm, but scan speed of between 500-1500 mm/s and hatch distance of between 0.1-0.15 mm.

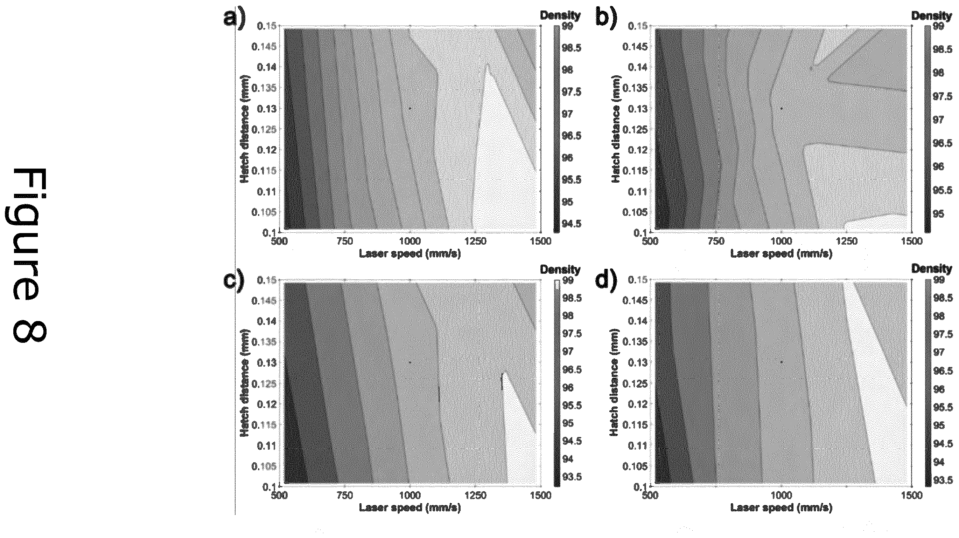

In total, 13 samples were printed with this DOE for each alloy and the results were measured as surface plots, as shown in Figure 8.

The second DOE was then done to verify the existence of target relative density for the parameters mentioned above.

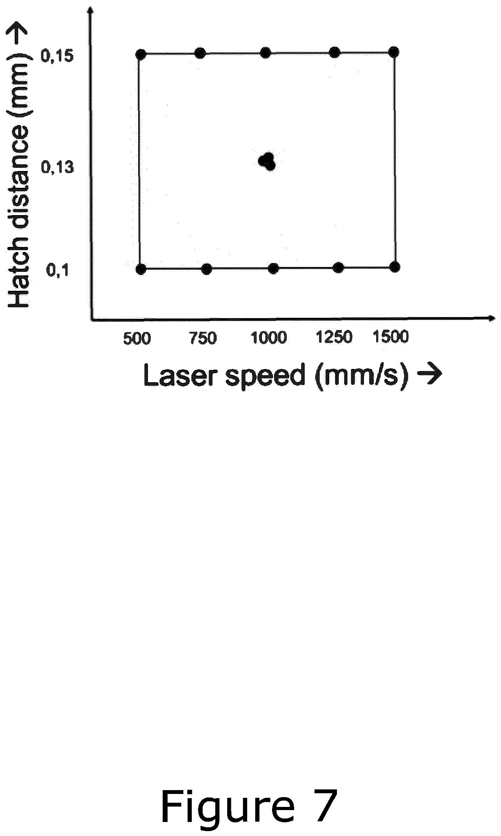

A total of 12 samples were printed and the resulting surface plot is shown in Figure 7 a) and b).

Following this second DOE, well above the target relative density was established to be used for printing many samples for all alloys (60-75 samples) using parameter settings for maximum relative density (170 W power, 0.1 mm hatch distance and 1500 mm/s laser speed).

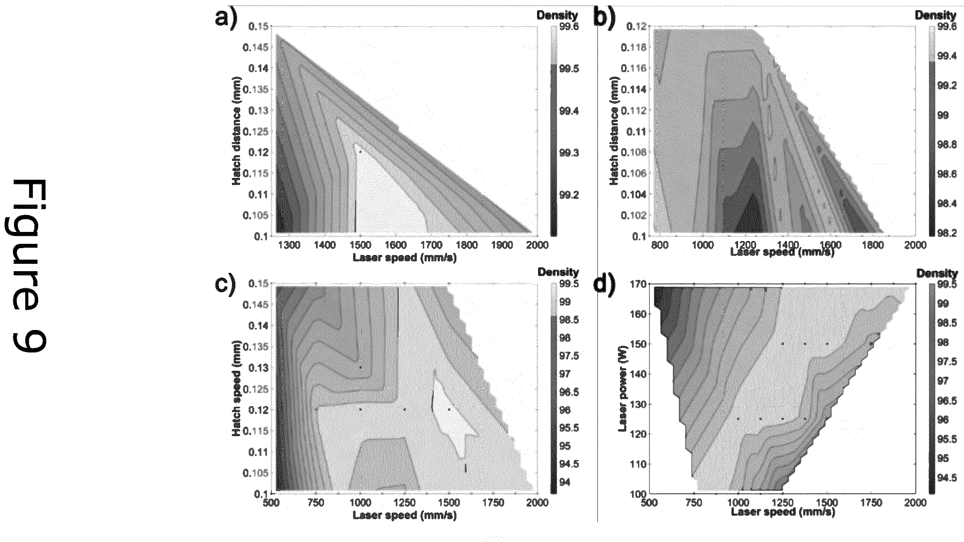

Finally, a DOE was also designed with similar concept involving 21 samples, changing the laser power along with hatch distance and speed. Still, the range of processing parameters was kept conservative to only expect high density samples (>98% relative density). The surface plot resulting from the third DOE is shown in Figure 9 a)-b).

The final processing window was settled derived after overlapping all results from the three DOEs, thus showing processing parameter windows with resulting in a relatively high-density (>99 %) according to the surface plots shown in Figure 9 c)-d).

## Example 7 - Microstructure evaluation and mechanical testing

All the samples were prepared by cutting them close to the center of all three planes (as shown in Figure 6) followed by mounting them in an epoxy-based thermoset resin, called Polyfast (from Struers). This was followed by grinding/ polishing the samples as per standard Struers preparation for Al-alloys on a Struers TegraPol 31 machine. Samples were etched using standard Keller's reagent for making the melt pool boundaries visible.

## Example 8 - X-ray diffraction

The X-ray diffraction (XRD) of samples was done on a finely grinded sample (till 2000 grit size) using a Bragg-BrentanoHD X-ray machine with a Cu source (K$\alpha$ = 1.5406Å) with 40 mA and 45 kV as the generator settings, scanned between 20°-100° 2$\Theta$ with a step size of 0.007° and scan step time as 68.59s.

X-ray diffraction was conducted on all four alloys (A, B, C, D) in the as-printed condition. It was done on the samples with high density (>99%).

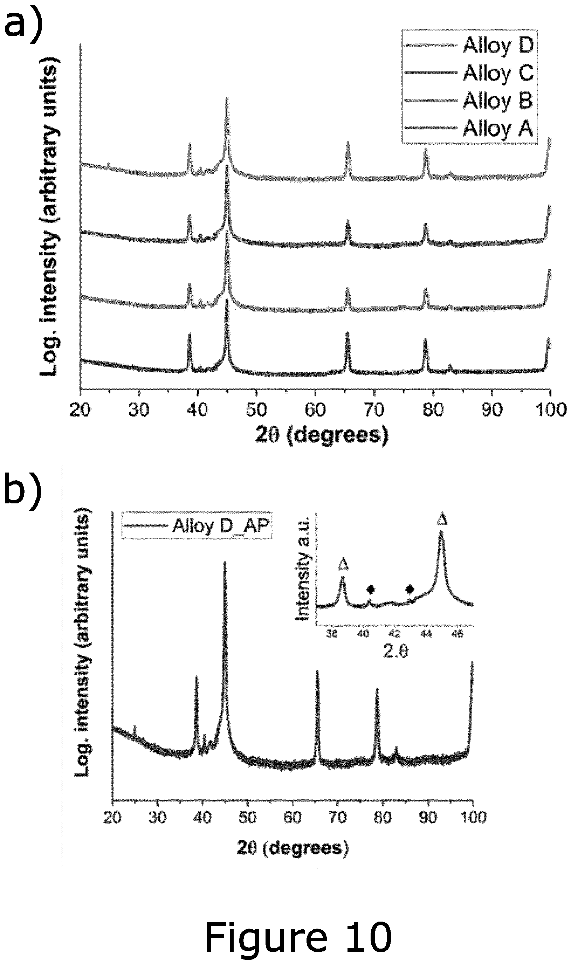

In the XRD plots presented in Figure 10, it was observed that all four alloys show similar information from the peaks. The Al peaks were seen to be shifted to a higher angle (2$\Theta$) as compared to the positions expected for pure Al, which is attributed to solutes dissolved in solid solution. Minor peaks observed in all four alloys were observed at 40.4° and 43.0° (see close-up view in Figure 8b) are attributed to Al-Mn precipitates, which have also been confirmed via SEM analysis later.

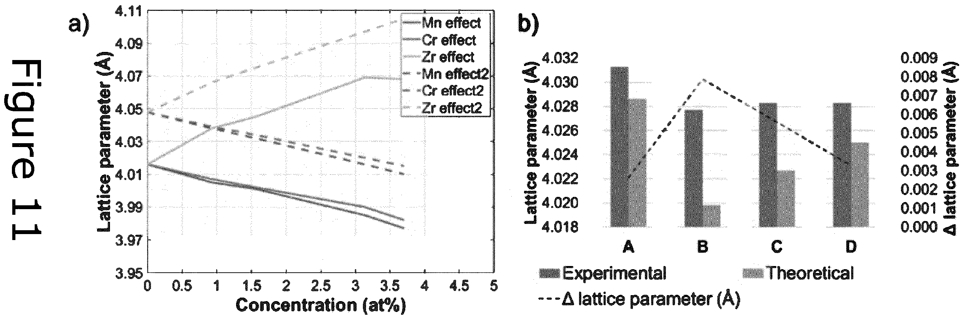

Figure 11 presents the attempt to correlate the content of each alloying element in the alloys with the Al peak shift. This was done by utilizing a 'rule of mixtures' approach, where the effect of each element was calculated by first-principle calculations for binary Al alloys based on T. Uesugi and K. Higashi, "First-principles studies on lattice constants and local lattice distortions in solid solution aluminum alloys," Computational Materials Science, vol. 67, pp. 1-10, 2013. The only modification made to the calculations was the starting point of pure-Al was modified to 4.0478 Å (PDF nr. 0040787), instead of 4.016 Å as assumed in Uesugi, as this value was seen to be much more reliable as per DIFFRAC.EVA software.

Thus, the effect of each element was plotted for 4.016 Å and a linear fit was extrapolated starting at 4.0478 Å instead of 4.016 Å (as shown in Figure 10 a)). The values were then verified against the experimental values derived from the strongest Al-peak at around 45°, as shown in Figure 10 b). It can be observed that the experimental and calculated lattice parameters are with 0.01 Å.

## Example 9 - Light optical microscopy

Light optical microscopy was done on a ZEISS Axioscope 7 instrument with an automated scale which enabled stitching of images of cross sections up to 50 mm$^2$ at 10X optical zoom.

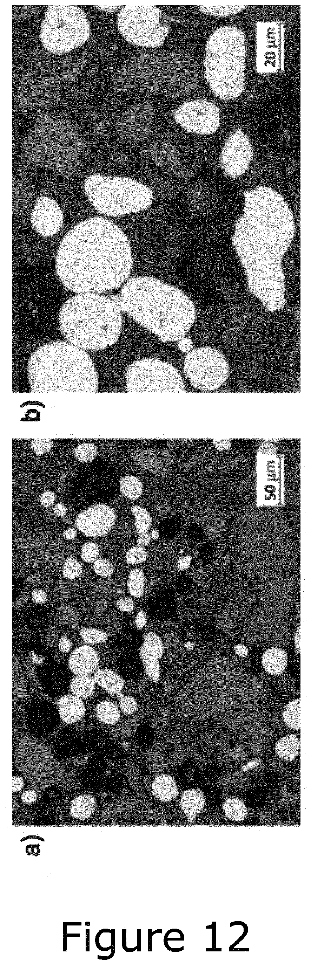

In the as-atomized state, the dendritic structure of the powder variants was clearly visible after etching with Keller's reagent. Figure 12 shows the optical microscopy image for Alloy C illustrating the dendritic structure formed during the atomization process.

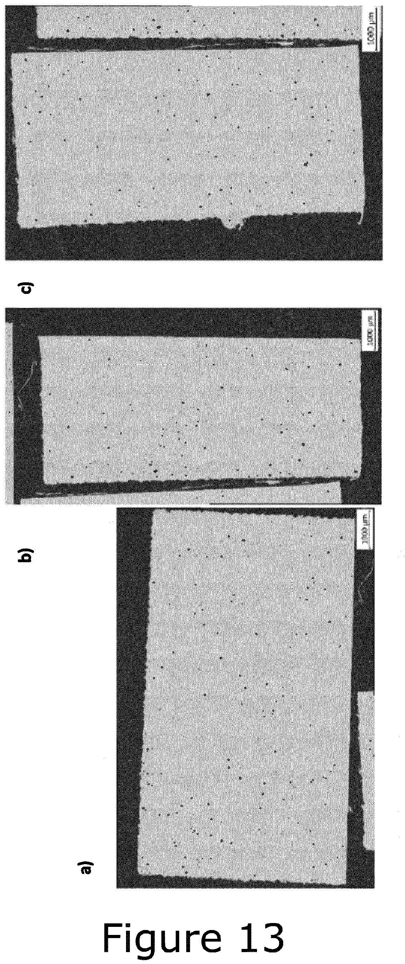

Optical microscopy images at low magnification from all three cut sections of Alloy D were also taken in as-printed state after polishing to show the nominally fully dense structure with average of 99.56% relative density. Representative images are shown in Figure 13 for all three planes of cut as was defined before.

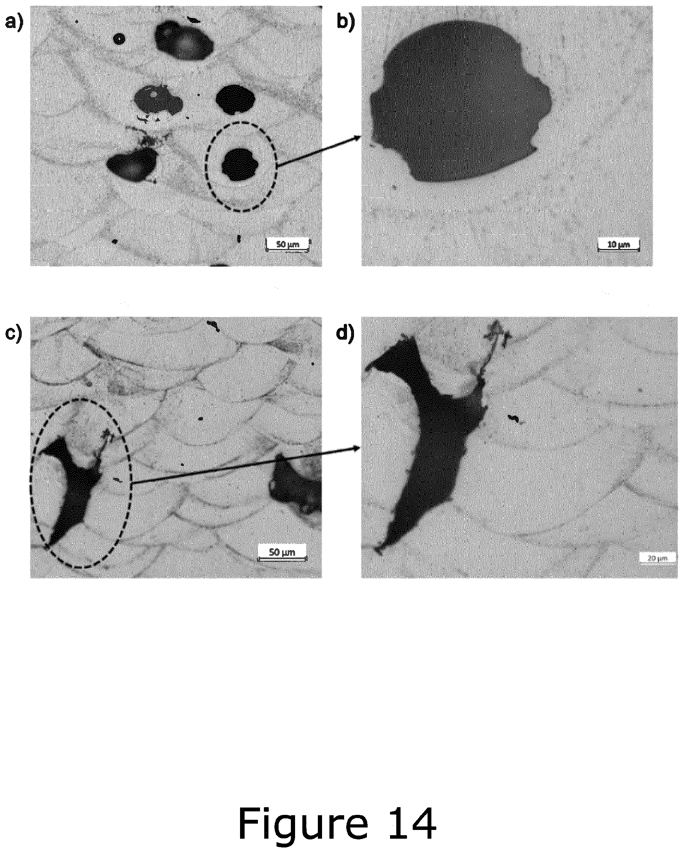

When analyzing all samples, two types of common defects were recognized as observed for LPBF printed objects of aluminum alloys. The first one in Figure 14(a)-(b), was considered to represent keyhole porosity or gas porosity, which occurs when the laser power is too high or scan speed to small; which means that the molten layer is to the point of particles ejection or evaporation in certain cases. The other in Figure 14 (c)-(d), shows the lack of fusion type of porosity, which occurs when there is too low laser power or too high scan speed with the consequence that conditions to melt and join the layer to its neighbors are not sufficient.

Accordingly, the observed porosities are likely to represent maximum porosities under not optimized LPBF-printing conditions.

### Example 10 - Electron Microscopy

Microstructure evaluation was done on a Leo Gemini 1550 SEM equipped with field-emission gun. Imaging was done with secondary electron (SE) and back scattered electron (BSE) receivers, depending on the type of image contrast required. X-ray energy dispersive spectroscopy (EDS) for microanalysis was done with the secondary electron receiver coupled with INCA X-sight software for composition analysis.

Selected samples were analyzed using a Zeiss Gemini SEM 450 scanning electron microscope (SEM) with field emission gun source for microanalysis. The microscope was fitted with a Bruker Quantax FlatQuad Energy Dispersive X-Ray Spectroscopy (EDX) detector which enables elemental mapping of microstructure at sub-micron resolutions.

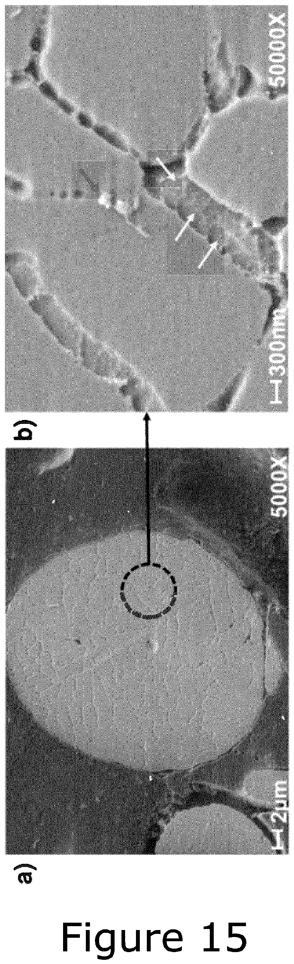

Powder in as-atomized state showed a purely dendritic structure for all alloys. Figure 15a illustrates a cross-section view of a particle of Alloy C. High magnification imaging additionally revealed some fine nanometric sized particles (<100 nm) inside the dendrites as shown in Figure 15b. The chemical composition of these particles could not be identified as they were too small to be resolved by using EDS in SEM.

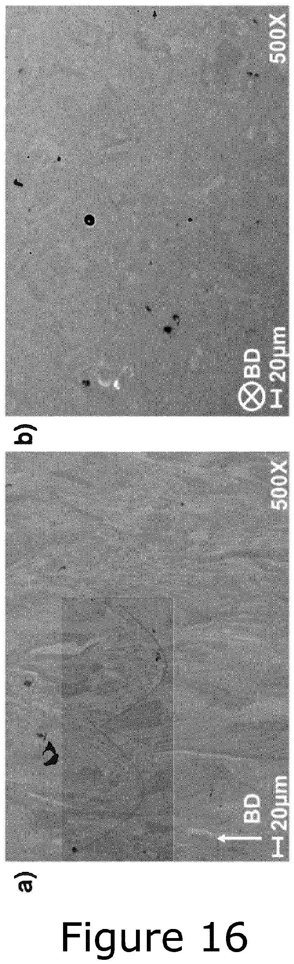

After printing, the cubes were polished and lightly etched before characterization in the SEM in back scattered mode (BSE), to be able to recognize grain contrast easily. The images along front plane and top plane are shown in Figure 16 showing an apparent columnar structure along the build direction.

On further investigation of the front plane, it was observed that two different categories of precipitates formed in the alloy, characterized by their morphology and location in the sample:

1. Precipitates located at melt pool boundaries
2. Precipitates located at grain/sub-grain boundaries

The precipitates located at melt pool boundaries are shown in Figure 17 where it can be seen that these precipitates have two typical sizes: smaller ones with spherical morphology and average sizes of <100 nm; larger ones of between 200-500 nm in size.

The second category of precipitates were those forming at grain/ sub-grain (cell) boundaries. Their shape was rod like with length of 200-400 nm and small diameter (<50 nm). The precipitates are shown quite clearly in Figure 18.

It is supposed that secondary phase particles aligning themselves along grain/ sub-grain boundaries suggest cellular type of solidification. The particles could have formed along these boundaries during solidification, thus causing cellular solidification structure.

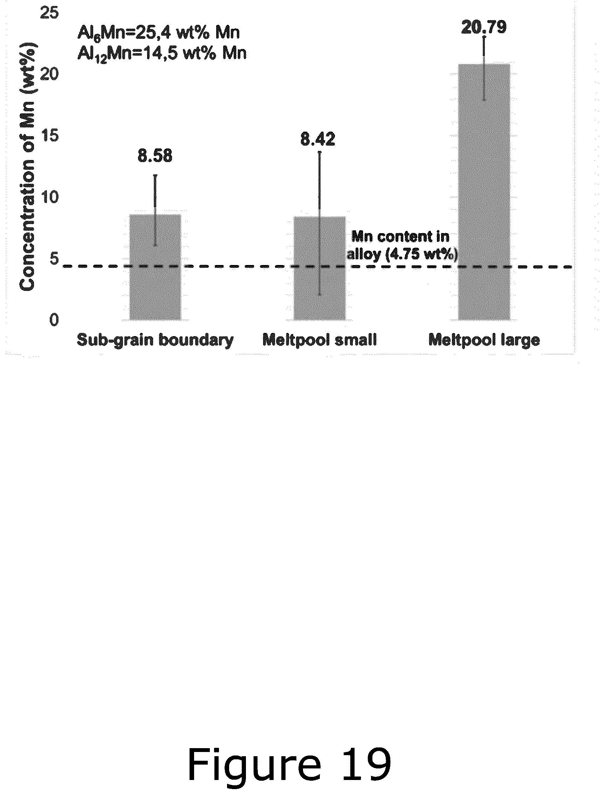

Figure 19 shows the summary based on EDS point scans of these three types of precipitates. The EDS has a much larger spread for smaller particles due to the X-ray interaction volume generated by electron beam of the SEM as compared to the volume of precipitate. However, to compensate for this, higher number of point scans (>25) at high resolution were done to get a consistent result.

The results showed that the smaller melt pool boundary and sub-grain boundary precipitates were richer in Mn than the matrix concentration, but it could not be indicated if they would be either of $Al_{12}Mn$ (metastable) or $Al_6Mn$ (stable). The larger melt pool boundary precipitates, however, were shown to have close to $Al_6Mn$ stoichiometry.

After depicting the size, morphology and chemistry of the secondary phase particles in the as-atomized and as-printed state, the chemical composition of the matrix was assessed using EDS chemical analyses in the SEM. It was observed that the matrix was usually supersaturated with elements in solid solution excluding the nanometric particles formed at melt pool boundaries or grain/ sub-grain boundaries. The EDS analyses for matrix of all alloys as-atomized (A-A) and as-printed (A-P) is summarized in Table 9. In the alloy compositions, the balance is aluminum.

**Table 9: Chemical compositions via EDS for all four Al-alloys in as-atomized (A-A) and as-printed (A-P) conditions**

| Alloy name | Alloy composition (wt. %) | Condition | Al (wt. %) | Mn (wt. %) | Cr (wt. % ) | Zr (wt. % ) | Fe (wt. % ) | Si (wt. %) | O (wt. % ) |
|---|---|---|---|---|---|---|---|---|---|
| Alloy A | 4.8 Mn | A-A | 93.9 | 4.80 | 0.01 | 0.61 | 0.12 | 0.05 | 0.54 |
| | 0.48 Zr | A-P | 93.8 | 4.83 | 0.00 | 0.59 | 0.16 | 0.14 | 0.46 |
| Alloy B | 5.0 Mn | A-A | 93.7 | 4.71 | 0.81 | 0.06 | 0.15 | 0.05 | 0.50 |
| | 0.8 Cr | A-P | 93.6 | 4.95 | 0.76 | 0.02 | 0.15 | 0.06 | 0.47 |
| Alloy C | 4.9 Mn | A-A | 93.1 | 4.89 | 0.84 | 0.52 | 0.11 | 0.09 | 0.41 |
| | 0.8 Cr 0.56 Zr | A-P | 92.9 | 5.01 | 0.81 | 0.57 | 0.21 | 0.14 | 0.36 |
| Alloy D | 5.0 Mn 0.8Cr | A-A | 93.0 | 4.81 | 0.78 | 0.72 | 0.15 | 0.04 | 0.50 |
| | 0.58 Zr | A-P | 92.8 | 5.05 | 0.82 | 0.63 | 0.19 | 0.10 | 0.45 |

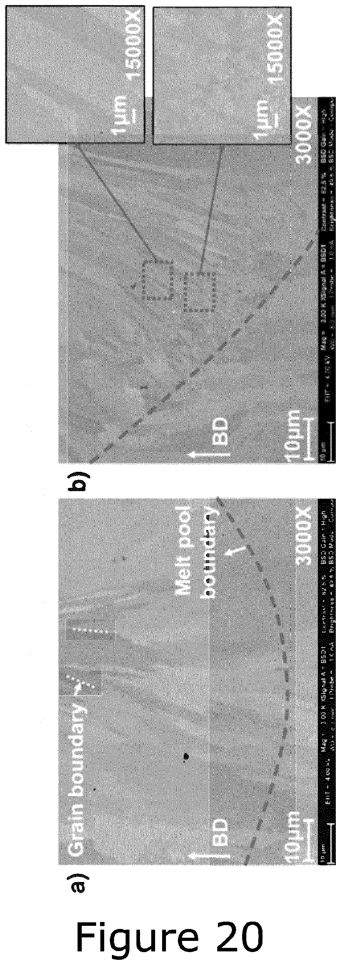

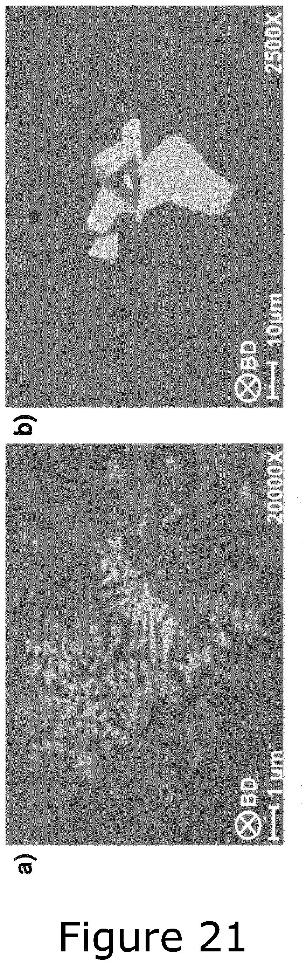

Occasionally, some of the melt pools were seen to have refined grain structure. This effect is shown for Alloy D in Figure 20 b). A few Zr-containing particles were also seen in as-printed state, having faceted structure or dendritic-like structure, see Figure 21. Please note that the sizes of these structures vary by an order of magnitude. The formation of large faceted particles is not clear and the average composition of both precipitates is shown in Table 10, wherein is shown the apparent composition as per EDS in faceted Al-Zr structures as seen in Alloy C and D in Figure 21(a)(b)

**Table 10: Apparent precipitate composition**

| Alloy | Composition (wt.%) | Al (wt.%) | Zr (wt.%) |
|---|---|---|---|
| D | Al-4.9Mn-0.8Cr-0.56Zr | 59.4 | 40.6 |
| C | Al-5.0Mn-0.8Cr-0.58Zr | 46.1 | 51.9 |

**Experimental Discussion**

Solidification cracking, common in LPBF-printing of certain Al-alloys was addressed in the present study. This problem was resolved by basing the alloy compositions of the invention to include elements that are less prone to segregate during solidification.

This study introduces a family of novel aluminum alloys including two ternary and two quaternary variants. The alloy compositions have been designed to utilize the unique processing conditions provided by rapid solidification and re-melting that occur during additive manufacturing when employing laser-based powder bed fusion.

These alloying design principles follow predictions of the alloy solidification by using ThermoCalc software. This has enabled a straightforward path to completely avoid solidification cracking. The basis for the alloy design is to develop aluminum alloys that can contain higher amounts of solutes in supersaturated solid solution, which can be later employed to achieve high strength via solid solution strengthening integrated with secondary phase precipitate strengthening.

These alloys are expected to be suitable for high temperature applications, as it is shown that they are resistant to hardening up to 523 K in as-printed condition. The microhardness results showed that upon ageing at 678 K, the average hardness goes from 105 HV in as-printed condition up to 130 HV in potential peak aged condition.

The solidification cracking can be depicted to arise from shift in concentration gradients in the liquid as solidification occurs, thus leading to higher solute content in the last liquid, causing higher volumetric shrinkage when this liquid solidifies. These cracks can form between solidifying grains and span several grains. This means that there is minimum temperature gradient, thus ensuring good amount of liquid metal available for bonding along two grain boundaries and avoiding crack formation. Following Scheil solidification curves, it was shown that the solidification cracking susceptibility for the novel Al-alloys in this respect developed is significantly reduced. The design of experiments supported this cracking-resistance and thus all the samples fabricated were seen to be devoid of cracks in as-printed state.

The LPBF processing involves higher cooling rates owing to rapid melting and solidification of a thin layer (usually 20-40 μm) of metal powder, which leads to cooling rates in range of 103-105 K/s. This provides alloy designers opportunity to assume higher supersaturation of elements in Al-matrix during the AM processing.

The alloying elements, and the compositions, were selected based on research conducted on rapidly solidified material where the benefits of transition metal elements into the solid solution of aluminum alloys was advantageously used.

The EDS results show that almost all the Mn and Cr dissolves in the matrix except small precipitates formed during solidification (sub-grain boundary precipitates) and remelting of layers which is seen close to the melt pool boundaries. This amount of precipitation is surprisingly small compared to other known alloys in the art.

Since there is always an effect of re-melting of layers and segregations along the solidification front during processing, formation of secondary precipitates cannot be avoided completely in the as-printed state and nanometric phases containing Mn, Cr were observed. In the art, the segregation of Mn along grain boundaries has been shown experimentally in rapidly solidified and nanocrystalline Al-Mn based alloys by other authors, suggesting also that higher concentrations of Mn lead to formation of 'quasicrystalline' phases, which are metastable phases with a composition close to $Al_6Mn$ that possess a five-fold symmetry with the Al-matrix.

It is suggested that the strength in as-printed version of the alloys is a mix of solid-solution strength and precipitate strengthening. The nanometric precipitates help to restrict motion of dislocations and their relatively small size helps in being more efficient to strengthening the matrix.

As mentioned before, even higher strength can be achieved after ageing by balancing the coarsening of the grain/ sub-grain boundary precipitates and nucleation/ growth of new nanometric $L1_2 Al_3 Zr$ precipitates.

Since some of the nanometric precipitates containing Mn, Cr could be quasicrystals, or precursors to quasicrystals, heat ageing treatment needs to be developed to control their formation and preventing them to form stable orthorhombic $Al_6Mn$ phase.

It can be supposed that the strengthening of this new alloy family by $Al_x Mn$ precipitates and $Al_3 Zr$ precipitates is a competing mechanism between two precipitates, which needs to be further investigated and developed to tune properly the hardness and tentative strength values. Beneficially, the as-printed versions of the alloys are resistant to ageing up to 24 hours at 523 K.

CLOSING COMMENTS

It is to be understood, that the embodiments shown in the figures are for illustration of the present invention and cannot be construed as being limiting on the present invention. Unless otherwise indicated, the drawings are intended to be read (e.g., cross-hatching, arrangement of parts, proportion, degree, etc.) together with the specification, and are to be considered a portion of the entire written description of this disclosure.

**Claims**

1. A pre-alloyed Al-based powder suitable for additive manufacturing consisting by weight of total pre-alloyed Al-based powder of:

   3 to 5.5% by weight of Mn,
   0.2 to 2% by weight of Zr,
   0.2 to 1.4% by weight of Cr,
   0 to 2% by weight of Mg,
   at most 0.7% by weight of Fe and Si in total,
   at most 0.7% by weight of O as an inevitable impurity, and, at most 0.5% by weight of further inevitable impurities,

   balanced with Al.

2. A pre-alloyed Al-based powder according to claim 1, wherein the content of Zr is from 0.3 to 1.8% by weight.

3. A pre-alloyed Al-based powder according to any of claim 1 or 2, wherein the content of Cr is from 0.3 to 1.4 % by weight.

4. A pre-alloyed Al-based powder according to any of claims 1 to 3, wherein the total content of Fe and Si is at most 0.2% by weight.

5. A pre-alloyed Al-based powder according to any of claims 1 to 4, the pre-alloyed Al-based powder being free of intentionally added Mg.

**6.** A pre-alloyed Al-based powder according to any of claims 1 to 5, wherein the total content of Mn+Zr+Cr is from 3.4 to 8.5 % by weight.

**7.** A pre-alloyed Al-based powder according to any of claims 1 to 6, wherein the pre-alloyed Al-based powder is produced by melting materials with the desired composition and performing inert gas atomization on the melt.

**8.** A pre-alloyed Al-based powder according to any of claims 1-7 having a particle size range of 10-53 $\mu$m as measured by laser diffraction according to ISO 13320-1 1999 with less than 10% of the particles falling outside the specified particle size range.

**9.** A process for producing an article by additive manufacturing comprising the following steps:

- providing a pre-alloyed Al-based powder according any of claims 1-8;
- depositing a layer of the pre-alloyed Al-based powder forming a powder bed;
- heating said pre-alloyed Al-based powder according to a predetermined pattern by laser or electron-beam to fuse or melt the particles to be bound;
- cooling the fused or melted particles;
- repeating the depositing, heating and cooling steps until an additive manufactured article is formed;
- recover the produced article.

**10.** A process according to claim 9 followed by heat treatment, wherein the heat treatment encompasses heating the produced article to a temperature of 150-450°C for a period of time of at least 0.5 hour in an atmosphere of air.

**11.** An article formed by a melt fusion process of a pre-alloyed Al-powder according to any of claims 1-8.

**12.** An article formed by a thermal fusion process of a pre-alloyed Al-powder according to claim 11, wherein the melt fusion process is in accordance with any of the claims 9 or 10.

## Patentansprüche

**1.** Vorlegiertes Pulver auf Al-Basis, das für generative Fertigung geeignet ist und nach Gewicht des gesamten vorlegierten Pulvers auf Al-Basis aus Folgendem besteht:

3 bis 5,5 Gew.-% Mn,
0,2 bis 2 Gew.-% Zr,
0,2 bis 1,4 Gew.-% Cr,
0 bis 2 Gew.-% Mg,
höchstens 0,7 Gew.-% Fe und Si insgesamt,
höchstens 0,7 Gew.-% O als eine unvermeidliche Verunreinigung
und höchstens 0,5 Gew.-% weitere unvermeidliche Verunreinigungen,
wobei Al den Rest bildet.

**2.** Vorlegiertes Pulver auf Al-Basis nach Anspruch 1, wobei der Zr-Gehalt von 0,3 bis 1,8 Gew.-% beträgt.

**3.** Vorlegiertes Pulver auf Al-Basis nach einem der Ansprüche 1 oder 2, wobei der Cr-Gehalt von 0,3 bis 1,4 Gew.-% beträgt.

**4.** Vorlegiertes Pulver auf Al-Basis nach einem der Ansprüche 1 bis 3, wobei der Gesamtgehalt an Fe und Si höchstens 0,2 Gew.-% beträgt.

**5.** Vorlegiertes Pulver auf Al-Basis nach einem der Ansprüche 1 bis 4, wobei das vorlegierte Pulver auf Al-Basis kein absichtlich zugesetztes Mg enthält.

**6.** Vorlegiertes Pulver auf Al-Basis nach einem der Ansprüche 1 bis 5, wobei der Gesamtgehalt an Mn+Zr+Cr von 3,4 bis 8,5 Gew.-% beträgt.

**7.** Vorlegiertes Pulver auf Al-Basis nach einem der Ansprüche 1 bis 6, wobei das vorlegierte Pulver auf Al-Basis durch Schmelzen von Materialien mit der gewünschten Zusammensetzung und Durchführen einer Inertgaszerstäubung an der Schmelze hergestellt wird.

8. Vorlegiertes Pulver auf Al-Basis nach einem der Ansprüche 1-7, einen Partikelgrößenbereich von 10-53 $\mu$m, gemessen durch Laserbeugung nach ISO 13320-1 1999, aufweisend, wobei weniger als 10 % der Partikel außerhalb des spezifizierten Partikelgrößenbereichs liegen.

9. Verfahren zum Herstellen eines Artikels durch generative Fertigung, die folgenden Schritte umfassend:

   - Bereitstellen eines vorlegierten Pulvers auf Al-Basis nach einem der Ansprüche 1-8;
   - Abscheiden einer Schicht des vorlegierten Pulvers auf Al-Basis zum Ausbilden eines Pulverbetts;
   - Erhitzen des vorlegierten Pulvers auf Al-Basis nach einem vorbestimmten Muster mittels Laser oder Elektronenstrahl, um die zu bindenden Partikel zu verschmelzen oder zu schmelzen;
   - Kühlen der verschmolzenen oder geschmolzenen Partikel;
   - Wiederholen der Schritte des Abscheidens, Erhitzens und Kühlens, bis ein generativ gefertigter Artikel ausgebildet ist;
   - Gewinnen des hergestellten Artikels.

10. Verfahren nach Anspruch 9, gefolgt von einer Wärmebehandlung, wobei die Wärmebehandlung Erhitzen des hergestellten Artikels auf eine Temperatur von 150-450 °C für einen Zeitraum von mindestens 0,5 Stunden in einer Luftatmosphäre einschließt.

11. Artikel, durch ein Schmelzfusionsverfahren aus einem vorlegierten Pulver auf Al-Basis nach einem der Ansprüche 1-8 ausgebildet.

12. Artikel, durch ein thermisches Fusionsverfahren aus einem vorlegierten Pulvers auf Al-Basis nach Anspruch 11 ausgebildet, wobei das Schmelzfusionsverfahren nach einem der Ansprüche 9 oder 10 ist.

**Revendications**

1. Poudre préalliée à base d'Al adaptée à la fabrication additive, constituée en poids de poudre préalliée totale à base d'Al de :

   3 à 5,5 % en poids de Mn,
   0,2 à 2 % en poids de Zr,
   0,2 à 1,4 % en poids de Cr,
   0 à 2% en poids de Mg,
   au plus 0,7 % en poids de Fe et Si au total,
   au plus 0,7 % en poids de O en tant qu'impureté inévitable,
   et, au plus 0,5 % en poids d'autres impuretés inévitables,
   le reste étant l'Al.

2. Poudre préalliée à base d'Al selon la revendication 1, dans laquelle la teneur en Zr est de 0,3 à 1,8 % en poids.

3. Poudre préalliée à base d'Al selon l'une quelconque des revendications 1 ou 2, dans laquelle la teneur en Cr est de 0,3 à 1,4 % en poids.

4. Poudre préalliée à base d'Al selon l'une quelconque des revendications 1 à 3, dans laquelle la teneur totale en Fe et Si est d'au plus 0,2 % en poids.

5. Poudre préalliée à base d'Al selon l'une quelconque des revendications 1 à 4, la poudre préalliée à base d'Al étant exempte de Mg ajouté intentionnellement.

6. Poudre préalliée à base d'Al selon l'une quelconque des revendications 1 à 5, dans laquelle la teneur totale en Mn+Zr+Cr est de 3,4 à 8,5 % en poids.

7. Poudre préalliée à base d'Al selon l'une quelconque des revendications 1 à 6, dans laquelle la poudre préalliée à base d'Al est produite en faisant fondre des matériaux ayant la composition souhaitée et en effectuant une atomisation de gaz inerte sur la masse fondue.

8.  Poudre préalliée à base d'Al selon l'une quelconque des revendications 1 à 7, comportant une plage de taille de particules de 10 à 53 $\mu$m telle que mesurée par diffraction laser selon la norme ISO 13320-1 1999, avec moins de 10 % des particules se situant en dehors de la plage de tailles de particules spécifiée.

9.  Procédé permettant la production d'un article par fabrication additive comprenant les étapes suivantes :

    - fourniture d'une poudre préalliée à base d'Al selon l'une quelconque des revendications 1 à8 ;
    - dépôt d'une couche de la poudre préalliée à base d'Al formant un lit de poudre ;
    - chauffe de ladite poudre préalliée à base d'Al selon un modèle prédéterminé par laser ou faisceau d'électrons pour fusionner ou faire fondre les particules à lier ;
    - refroidissement des particules fondues ou fusionnées ;
    - répétition des étapes de dépôt, chauffe et refroidissement jusqu'à ce qu'un article fabriqué de manière additive soit formé ;
    - récupération de l'article produit.

10. Procédé selon la revendication 9 suivi d'un traitement thermique, dans lequel le traitement thermique comporte la chauffe de l'article produit à une température de 150 à 450° C pendant une période de temps d'au moins 0,5 heure dans une atmosphère d'air.

11. Article formé par un procédé de fusion à l'état fondu d'une poudre préalliée d'Al selon l'une quelconque des revendications 1 à 8.

12. Article formé par un procédé de fusion thermique d'une poudre préalliée d'Al selon la revendication 11, dans lequel le procédé de fusion à l'état fondu est selon l'une quelconque des revendications 9 ou 10.

# Figure 1

Figure 2

# Figure 3

Figure 4

Figure 5

Figure 6

Figure 7

Figure 8

Figure 9

a)

b)

Figure 10

Figure 11

Figure 12

# Figure 13

# Figure 14

# Figure 15

Figure 16

Figure 17

Figure 18

Figure 19

Figure 20

Figure 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0105595 A2, Alcan
- CN 11659889 A
- WO 2020139427 A
- WO 2018009359 A1
- EP 3165620 A1
- EP 3181711 A1

### Non-patent literature cited in the description

- **T. UESUGI ; K. HIGASHI.** First-principles studies on lattice constants and local lattice distortions in solid solution aluminum alloys. *Computational Materials Science,* 2013, vol. 67, 1-10